# EUROPEAN PATENT APPLICATION

(11) **EP 4 503 746 A1**
(43) Date of publication of application: **05.02.2025**
(21) Application number: 23791167.2
(22) Date of filing: 17.04.2023
(51) Int. Cl.: H04W 40/02

(54) **COMMUNICATION METHOD AND DEVICES**

(30) Priority: 21.04.2022 CN 202210422990; 31.05.2022 CN 202210610936
(71) Applicant: Huawei Technologies Co., Ltd., Shenzhen, Guangdong 518129 (CN)
(72) Inventor: YAO, Chuting, Shenzhen, Guangdong 518129 (CN); CAI, Yu, Shenzhen, Guangdong 518129 (CN); XU, Haibo, Shenzhen, Guangdong 518129 (CN); WANG, Rui, Shenzhen, Guangdong 518129 (CN); TONG, Youwan, Shenzhen, Guangdong 518129 (CN)
(74) Representative: Isarpatent
(86) International application number: PCT/CN2023/088618
(87) International publication number: WO 2023/202512

(57) **Abstract**

This application relates to a communication method and device. An access network device determines to add, for a remote terminal device, a direct path for connecting a first cell. The remote terminal device is connected to a second cell through an indirect path. The access network device sends an RRC reconfiguration message to the remote terminal device, to indicate the remote terminal device to switch to the direct path. The RRC reconfiguration message further includes first indication information, to indicate not to release the indirect path. When being indicated to switch to the direct path, the remote terminal device may further be indicated not to release the indirect path. In this case, the remote terminal device not only can add the direct path, but also does not need to release the maintained indirect path or change a configuration of the maintained path. In this way, the remote terminal device can simultaneously maintain the two paths, to improve resource utilization.

## Description

### CROSS-REFERENCE TO RELATED APPLICATIONS

This application claims priority to Chinese Patent Application No. 202210422990.2, filed with the China National Intellectual Property Administration on April 21, 2022 and entitled "SIDELINK RESOURCE SELECTION METHOD AND ELECTRONIC DEVICE", which is incorporated herein by reference in its entirety. This application claims priority to Chinese Patent Application No. 202210610936.0, filed with the China National Intellectual Property Administration on May 31, 2022 and entitled "COMMUNICATION METHOD AND DEVICE", which is incorporated herein by reference in its entirety.

### TECHNICAL FIELD

This application relates to the field of communication technologies, and in particular, to a communication method and device.

### BACKGROUND

When a user equipment (user equipment, UE) is far away from a base station, for example, the UE is not within a coverage range of the base station, or the UE is at a coverage edge of the base station, or quality of a path between the UE and the base station is poor, the UE may communicate with the base station via another UE. In other words, the another UE may provide a relay service for the UE, so that the UE can communicate with the base station. The UE that communicates with the base station via the another UE may be referred to as a remote (remote) UE, and the UE that provides the relay service for the remote UE may be referred to as a relay (relay) UE.

It can be learned that the remote UE may independently support two paths, where one path is a direct (direct) path for communicating with the base station through a Uu interface, and the other path is an indirect (indirect) path for communicating with the base station via the relay UE. Currently, the remote UE may switch between the two paths, for example, switch from the direct path to the indirect path, or switch from the indirect path to the direct path. After the remote UE switches to the direct path, the previously maintained indirect path is released, and a resource on the indirect path cannot be used, causing a waste of resources.

### SUMMARY

Embodiments of this application provide a communication method and device, to improve resource utilization.

According to a first aspect, a first communication method is provided. The method may be performed by an access network device, or may be performed by another device that includes a function of the access network device, or may be performed by a chip system (or a chip) or another functional module. The chip system or the functional module can implement the function of the access network device. The chip system or the functional module is, for example, disposed in the access network device. The method includes: determining to add, for a remote terminal device, a direct path for connecting a first cell, where the remote terminal device is connected to a second cell through an indirect path; and sending an RRC reconfiguration message to the remote terminal device, where the RRC reconfiguration message indicates the remote terminal device to switch to the direct path, the RRC reconfiguration message further includes first indication information, and the first indication information indicates not to release the indirect path.

In embodiments of this application, when adding a path A, the remote terminal device may not release a maintained path B, to make better use of a resource. The remote terminal device may simultaneously maintain the two paths, to improve transmission reliability and stability. In addition, considering that in a process of adding the path A, impact on transmission of the path B may be caused, in embodiments of this application, the impact on the path B may be reduced or avoided by using an indication. For example, when being indicated to switch to the direct path, the remote terminal device may further be indicated not to release the indirect path. In this case, the remote terminal device not only can add the direct path, but also does not need to release the maintained indirect path or change a configuration of the maintained path. In this way, the remote terminal device can simultaneously maintain the two paths, to improve resource utilization. For the remote terminal device, because the indirect path does not need to be released, the transmission reliability and stability can be improved through the two paths, a change to the configuration of the maintained path is avoided or reduced, a delay caused by the configuration change to the maintained path is reduced, and user experience is improved.

In an optional implementation, the RRC reconfiguration message includes an MCG information element, and the MCG information element includes the first indication information; or the RRC reconfiguration message includes an SCG information element, and the SCG information element includes the first indication information. The first indication information may be included in the MCG information element, or may be included in the SCG information element. This is flexible.

In an optional implementation, that the MCG information element includes the first indication information includes: the MCG information element includes a special cell configuration information element, the special cell configuration information element includes a reconfiguration with sync information element, and the reconfiguration with sync information element includes the first indication information; or the MCG information element includes a secondary cell configuration information element, the secondary cell configuration information element includes a reconfiguration with sync information element, and the reconfiguration with sync information element includes the first indication information. For example, if the second cell is a PCell in an MCG of the remote UE, and the second cell and the first cell are a same cell, the direct path may be added in a manner of reconfiguring the PCell, and the first indication information may be added to the reconfiguration with sync information element in the special cell configuration information element of the MCG information element. For another example, the direct path may be added in a manner of adding an SCell to an MCG of the remote terminal device. In this case, the first indication information may be added to the reconfiguration with sync information element in the secondary cell configuration information element of the MCG information element, and the secondary cell configuration information element may be used to configure the SCell.

In an optional implementation, the special cell configuration information element includes a parameter used by the remote terminal device to communicate in the first cell. Because the first cell needs to be added currently, and the remote terminal device needs to communicate in the first cell after the first cell is successfully added, the special cell configuration information element may further include some or all parameters for communication of the remote terminal device in the first cell.

In an optional implementation, the MCG information element further includes the secondary cell configuration information element. The secondary cell configuration information element includes second indication information. The second indication information indicates to change the second cell from a special cell in an MCG of the remote terminal device to a secondary cell in the MCG. It is equivalent to associating configuration information of the indirect path with the secondary cell configuration information element, and adding configuration information of the direct path to the special cell configuration information element of the MCG information element. This is equivalent to indicating that the second cell in which the indirect path is located is used as an SCell, and the first cell in which the direct path is located is used as a PCell. Because an SpCell in a cell group is a cell with a complete function, a cell in which the direct path is located may be used, as much as possible, as an SpCell in a cell group of the remote terminal device.

In an optional implementation, the second indication information includes configuration information of the indirect path. The configuration information of the indirect path includes, for example, an identifier of a relay terminal device, and may further include some other configuration information.

In an optional implementation, the first cell and the second cell are a same cell or different cells.

According to a second aspect, a second communication method is provided. The method may be performed by an access network device, or may be performed by another device that includes a function of the access network device, or may be performed by a chip system (or a chip) or another functional module. The chip system or the functional module can implement the function of the access network device. The chip system or the functional module is, for example, disposed in the access network device. The method includes: determining to add, for a remote terminal device, an indirect path for connecting a second cell via a relay terminal device, where the remote terminal device is connected to a first cell through a direct path; and sending an RRC reconfiguration message to the remote terminal device, where the RRC reconfiguration message includes third indication information, and the third indication information indicates to add the indirect path.

In this embodiment of this application, when adding a path A, the remote terminal device may not release a maintained path B, to make better use of a resource. The remote terminal device may simultaneously maintain the two paths, to improve transmission reliability and stability. In addition, considering that in a process of adding the path A, impact on transmission of the path B may be caused, in embodiments of this application, the impact on the path B may be reduced or avoided by using an indication. For example, the access network device may indicate the remote terminal device to add the indirect path. In this case, the remote terminal device not only can add the indirect path, but also does not need to release the maintained direct path or change a configuration of the maintained path. In this way, the remote terminal device can simultaneously maintain the two paths. For the remote terminal device, because the direct path does not need to be released, the transmission reliability and stability can be improved through the two paths, a change to the configuration of the maintained path is avoided or reduced, a delay caused by the configuration change to the maintained path is reduced, and user experience is improved.

In an optional implementation, the RRC reconfiguration message includes an MCG information element, and the MCG information element includes the third indication information.

In an optional implementation, that the MCG information element includes the third indication information includes: the MCG information element includes a special cell configuration information element, the special cell configuration information element includes a reconfiguration with sync information element, and the reconfiguration with sync information element includes the third indication information; or the MCG information element includes a secondary cell configuration information element, and the secondary cell configuration information element includes the third indication information. For example, if the first cell is a PCell in an MCG of the remote terminal device, and the first cell and the second cell are a same cell, both the indirect path and the direct path are for connecting the first cell. In addition, because the first cell is the PCell in the MCG of the remote terminal device, the third indication information may be included in the reconfiguration with sync information element in the special cell configuration information element of the MCG information element. For another example, if the first cell is a PCell in an MCG of the remote terminal device, and the first cell and the second cell are different co-site cells, it is equivalent to adding the indirect path to an SCell of the remote terminal device, and the third indication information may be included in the secondary cell configuration information element of the MCG information element.

In an optional implementation, the third indication information includes configuration information of the indirect path. The configuration information of the indirect path is used as the third indication information. This not only indicates to add the indirect path, but also indicates a configuration of the indirect path. Therefore, the configuration information of the indirect path does not need to be carried by using an additional information element, to help reduce signaling overheads.

According to a third aspect, a third communication method is provided. The method may be performed by an access network device, or may be performed by another device that includes a function of the access network device, or may be performed by a chip system (or a chip) or another functional module. The chip system or the functional module can implement the function of the access network device. The chip system or the functional module is, for example, disposed in the access network device. The method includes: determining to add a first path for a remote terminal device, where the remote terminal device is connected to a network through a second path, the first path is a direct path for connecting the remote terminal device and a first cell of the access network device, and the second path is an indirect path for connecting the remote terminal device and a second cell via a relay terminal device; or the first path is an indirect path for connecting the remote terminal device and a second cell via a relay terminal device, and the second path is a direct path for connecting the remote terminal device and a first cell of the access network device; and sending an RRC reconfiguration message to the remote terminal device, where the RRC reconfiguration message indicates the remote terminal device to add the first path to an SCG or an RCG.

In this embodiment of this application, a new path is added based on a configuration of the SCG or the RCG, so that the remote terminal device can effectively distinguish between two paths, to facilitate a configuration. Fourth indication information is added, so that the remote terminal device can reduce unnecessary reconfiguration processes, to reduce impact on data transmission.

In an optional implementation, that the RRC reconfiguration message indicates the remote terminal device to add the first path to an SCG includes: the RRC reconfiguration message includes an SCG information element, the SCG information element includes a special cell configuration information element, the special cell configuration information element includes fourth indication information, and the fourth indication information indicates to add the first path; or the RRC reconfiguration message includes an RCG information element, the RCG information element includes a special cell configuration information element, the special cell configuration information element includes fourth indication information, and the fourth indication information indicates to add the first path. In this embodiment of this application, the first path may be added to the SCG or the RCG. Because performance of an SpCell in a cell group is generally complete, the first path may be added to an SpCell in the SCG or the RCG. Therefore, the special cell configuration information element may include the fourth indication information, to add the first path to the SpCell in the SCG or the RCG.

In an optional implementation, the first path is the direct path, and the fourth indication information includes configuration information of the first path.

In an optional implementation, the first path is the indirect path, and the fourth indication information includes configuration information of the indirect path.

The configuration information of the first path is used as the fourth indication information. This not only indicates to add the first path, but also indicates a configuration of the first path. Therefore, the configuration information of the first path does not need to be carried by using an additional information element, to help reduce signaling overheads.

In an optional implementation, the SCG information element includes the special cell configuration information element, the special cell configuration information element includes a reconfiguration with sync information element, and the reconfiguration with sync information element includes the fourth indication information. The fourth indication information may be included in the reconfiguration with sync information element; the fourth indication information may be included in another information element included in the special cell configuration information element; or the fourth indication information may be directly included in the special cell configuration information element, and is not included in another information element in the special cell configuration information element. This manner is flexible.

According to a fourth aspect, a fourth communication method is provided. The method may be performed by an access network device, or may be performed by another device that includes a function of the access network device, or may be performed by a chip system (or a chip) or another functional module. The chip system or the functional module can implement the function of the access network device. The chip system or the functional module is, for example, disposed in the access network device. The method includes: determining to release a first path for a remote terminal device, where the remote terminal device is connected to a network through a second path, the first path is a direct path for connecting the remote terminal device and a first cell of the access network device, and the second path is an indirect path for connecting the remote terminal device and a second cell via a relay terminal device; or the first path is an indirect path for connecting the remote terminal device and a second cell via a relay terminal device, and the second path is a direct path for connecting the remote terminal device and a first cell of the access network device; and sending an RRC reconfiguration message to the remote terminal device, where the RRC reconfiguration message includes fifth indication information, and the fifth indication information indicates to release the first path.

In technical solutions provided in this embodiment of this application, the direct path or the indirect path may be released, and due to the fifth indication information, communication on one path is not affected when the other path is released, to reduce a process of reconfiguring or establishing one path when the remote terminal device releases the other path, and reduce a communication delay.

In an optional implementation, if the first path is the direct path, and the second path is the indirect path, the fifth indication information specifically indicates not to release the second path. The fifth indication information may indicate not to release the indirect path. In this manner, the remote terminal device can continue to keep the indirect path while releasing the direct path.

In an optional implementation, the RRC reconfiguration message includes an MCG information element, and the MCG information element includes the fifth indication information. The fifth indication information may be included in the MCG information element, or may be included in another information element.

In an optional implementation, that the MCG information element includes the fifth indication information includes: if the first path is the direct path, and the second path is the indirect path, the MCG information element includes a special cell configuration information element, the special cell configuration information element includes a reconfiguration with sync information element, the reconfiguration with sync information element includes a sidelink path switch configuration information element, and the sidelink path switch configuration information element includes the fifth indication information. Because the remote terminal device currently maintains the direct path and the indirect path, the direct path may be released by using a process of pathswitch to the indirect path. In other words, the RRC reconfiguration message may include the reconfiguration with sync information element, and the reconfiguration with sync information element may include the sidelink path switch configuration information element. In a normal procedure of pathswitch to the indirect path, after receiving the RRC reconfiguration message including the sidelink path switch configuration information element, the remote terminal device needs to change, to a default configuration, a configuration of an SRB 1 corresponding to the indirect path of the remote terminal device. However, a configuration of an SRB 1 corresponding to the indirect path of the relay terminal device does not change. In this case, the configuration of the SRB 1 of the remote terminal device may be different from the configuration of the SRB 1 of the relay terminal device. Therefore, the relay terminal device also needs to reconfigure the SRB 1 corresponding to the indirect path. This causes a waste of network resources, and also increases a communication delay. Therefore, in this embodiment of this application, the fifth indication information is added to the RRC reconfiguration message. The remote terminal device can determine, based on the fifth indication information, not to release the indirect path, or can determine that the indirect path does not need to be reestablished, or can determine that the indirect path does not need to be reconfigured (for example, the SRB 1 corresponding to the indirect path is not reconfigured), and continues to use an existing configuration of the indirect path. In this case, the relay terminal device does not need to reconfigure the indirect path either. Therefore, the waste of the network resources is reduced, and the communication delay is also reduced.

In an optional implementation, if the first path is the direct path, and the second path is the indirect path, the RRC reconfiguration message further includes sixth indication information, and the sixth indication information indicates PDCP entity re-establishment or data recovery. The remote terminal device may perform PDCP entity re-establishment or data recovery based on the sixth indication information. Therefore, for a DRB in an acknowledged mode, the remote terminal device may perform data retransmission on an unsuccessfully transmitted data packet on the released direct path, for example, may perform data retransmission through the unreleased indirect path.

In an optional implementation, if the first path is the indirect path, and the second path is the direct path, that the MCG information element includes the fifth indication information includes: the MCG information element includes a special cell configuration information element, the special cell configuration information element includes a reconfiguration with sync information element, and the reconfiguration with sync information element includes the fifth indication information; the MCG information element includes a secondary cell configuration information element, and the secondary cell configuration information element includes the fifth indication information; or the MCG information element includes a special cell configuration information element and a secondary cell configuration information element, the special cell configuration information element includes the fifth indication information and configuration information of the direct path, and the secondary cell configuration information element includes configuration information of the indirect path. For example, a bearer manner of the fifth indication information may be selected based on different cases of the first cell (for example, the first cell is an SCell or an SpCell); or a bearer manner of the fifth indication information may be selected based on another factor (for example, a type of an information element included in the RRC reconfiguration message). This is not specifically limited.

In an optional implementation, if the MCG information element includes the secondary cell configuration information element, and the secondary cell configuration information element includes the fifth indication information, and if the remote terminal device is further connected to a cell corresponding to the first path through another path, the fifth indication information specifically indicates to release the first path; or if the remote terminal device is connected to a cell corresponding to the first path only through the first path, the fifth indication information specifically indicates to release a secondary cell corresponding to the secondary cell configuration information element. In the cell corresponding to the first path, if the remote terminal device further maintains another path, the fifth indication information only needs to indicate to release the first path, and the remote terminal device may release the first path based on the fifth indication information, and may further continue to maintain the another path in the cell. However, if in the cell, the remote terminal device maintains only the first path, the fifth indication information may indicate to release the cell, and the remote terminal device does not need to continue to maintain a connection to the cell.

In an optional implementation, that the fifth indication information indicates to release the first path includes: the fifth indication information specifically indicates to release an SCG in which a cell corresponding to the first path is located; the fifth indication information indicates to release an MCG in which a cell corresponding to the first path is located; or the fifth indication information includes first sub information and second sub information, the first sub information indicates to change, to a new SCG, an MCG in which a cell corresponding to the first path is located, and indicates to change an original SCG to a new MCG, and the second sub information indicates to release the new SCG. For example, the first path is added by adding a cell group. If the first path needs to be released, the cell group may be released, and a process is simple.

According to a fifth aspect, a fifth communication method is provided. The method may be performed by an access network device, or may be performed by another device that includes a function of the access network device, or may be performed by a chip system (or a chip) or another functional module. The chip system or the functional module can implement the function of the access network device. The chip system or the functional module is, for example, disposed in the access network device. The method includes: determining to modify an indirect path for connecting a remote terminal device and a second cell via a relay terminal device, where the remote terminal device is connected to a first cell through a direct path; sending an RRC reconfiguration message to the remote terminal device, where the RRC reconfiguration message includes seventh indication information, the seventh indication information indicates to modify the indirect path, and the RRC reconfiguration message further includes an association relationship between configuration information of an RLC entity of the remote terminal device and an identifier of the relay terminal device, and includes an association relationship between configuration information of an SRAP entity of the remote terminal device and the identifier of the relay terminal device.

In this embodiment of this application, the remote terminal device can maintain a plurality of indirect paths. When some of the indirect paths are added or released, the remote terminal device may distinguish between configuration information of currently added or released indirect paths, to improve a success rate of adding or releasing the indirect paths. In addition, when an indirect link is added or released, communication on another indirect link is not affected, and a communication delay can be reduced.

In an optional implementation, the RRC reconfiguration message includes an MCG information element, and the MCG information element includes the seventh indication information. The seventh indication information may be included in the MCG information element, or may be included in another information element.

In an optional implementation, that the MCG information element includes the seventh indication information includes: the MCG information element includes a special cell configuration information element, the special cell configuration information element includes a reconfiguration with sync information element, and the seventh indication information is included in the reconfiguration with sync information element; or the MCG information element includes a secondary cell configuration information element, the secondary cell configuration information element includes a reconfiguration with sync information element, the seventh indication information is included in the reconfiguration with sync information element, and the seventh indication information specifically indicates to modify the indirect path or modify a secondary cell corresponding to the secondary cell configuration information element.

In an optional implementation, modifying a first path is adding the first path or releasing the first path.

In an optional implementation, the seventh indication information includes configuration information of the first path.

For technical effects brought by some implementations of the fifth aspect, refer to descriptions of technical effects of corresponding implementations in any one of the first aspect to the fourth aspect.

According to a sixth aspect, a sixth communication method is provided. The method may be performed by a terminal device, or may be performed by another device that includes a function of the terminal device, or may be performed by a chip system (or a chip) or another functional module. The chip system or the functional module can implement the function of the terminal device. The chip system or the functional module is, for example, disposed in the terminal device. Optionally, the terminal device is, for example, a remote terminal device. The method includes: receiving an RRC reconfiguration message from an access network device, where the RRC reconfiguration message indicates the remote terminal device to switch to a direct path for connecting a first cell, the remote terminal device is connected to a second cell through an indirect path, the RRC reconfiguration message further includes first indication information, and the first indication information indicates not to release the indirect path; and adding the direct path based on the RRC reconfiguration message, and skipping releasing the indirect path.

In an optional implementation, the RRC reconfiguration message includes an MCG information element, and the MCG information element includes the first indication information; or the RRC reconfiguration message includes an SCG information element, and the SCG information element includes the first indication information.

In an optional implementation, that the MCG information element includes the first indication information includes: the MCG information element includes a special cell configuration information element, the special cell configuration information element includes a reconfiguration with sync information element, and the reconfiguration with sync information element includes the first indication information; or the MCG information element includes a secondary cell configuration information element, the secondary cell configuration information element includes a reconfiguration with sync information element, and the reconfiguration with sync information element includes the first indication information.

In an optional implementation, the special cell configuration information element includes a parameter used by the remote terminal device to communicate in the first cell.

In an optional implementation, the MCG information element further includes the secondary cell configuration information element. The secondary cell configuration information element includes second indication information. The second indication information indicates to change the second cell from a special cell in an MCG of the remote terminal device to a secondary cell in the MCG.

In an optional implementation, the second indication information includes configuration information of the indirect path.

In an optional implementation, the first cell and the second cell are a same cell or different cells.

For technical effects brought by the sixth aspect or any one of the optional implementations, refer to descriptions of technical effects brought by the first aspect or corresponding implementations.

According to a seventh aspect, a seventh communication method is provided. The method may be performed by a terminal device, or may be performed by another device that includes a function of the terminal device, or may be performed by a chip system (or a chip) or another functional module. The chip system or the functional module can implement the function of the terminal device. The chip system or the functional module is, for example, disposed in the terminal device. Optionally, the terminal device is, for example, a remote terminal device. The method includes: receiving an RRC reconfiguration message from an access network device, where the RRC reconfiguration message includes third indication information, the third indication information indicates to add an indirect path for connecting a second cell via a relay terminal device, and the remote terminal device is connected to a first cell through a direct path; and adding the indirect path based on the RRC reconfiguration message, and skipping releasing the direct path.

In an optional implementation, the RRC reconfiguration message includes an MCG information element, and the MCG information element includes the third indication information.

In an optional implementation, that the MCG information element includes the third indication information includes: the MCG information element includes a special cell configuration information element, the special cell configuration information element includes a reconfiguration with sync information element, and the reconfiguration with sync information element includes the third indication information; or the MCG information element includes a secondary cell configuration information element, and the secondary cell configuration information element includes the third indication information.

In an optional implementation, the third indication information includes configuration information of the indirect path.

For technical effects brought by the seventh aspect or any one of the optional implementations, refer to descriptions of technical effects brought by the second aspect or corresponding implementations.

According to an eighth aspect, an eighth communication method is provided. The method may be performed by a terminal device, or may be performed by another device that includes a function of the terminal device, or may be performed by a chip system (or a chip) or another functional module. The chip system or the functional module can implement the function of the terminal device. The chip system or the functional module is, for example, disposed in the terminal device. Optionally, the terminal device is, for example, a remote terminal device. The method includes: receiving an RRC reconfiguration message from an access network device, where the RRC reconfiguration message indicates the remote terminal device to add a first path to an SCG, the remote terminal device is connected to a network through a second path, the first path is a direct path for connecting the remote terminal device and a first cell of the access network device, and the second path is an indirect path for connecting the remote terminal device and a second cell via a relay terminal device; or the first path is an indirect path for connecting the remote terminal device and a second cell via a relay terminal device, and the second path is a direct path for connecting the remote terminal device and a first cell of the access network device; and adding the first path to the SCG based on the RRC reconfiguration message, and skipping releasing the second path.

In an optional implementation, that the RRC reconfiguration message indicates the remote terminal device to add a first path to an SCG includes: the RRC reconfiguration message includes an SCG information element, the SCG information element includes a special cell configuration information element, the special cell configuration information element includes fourth indication information, and the fourth indication information indicates to add the first path.

In an optional implementation, the first path is the direct path, and the fourth indication information includes configuration information of the first path.

In an optional implementation, the first path is the indirect path, and the fourth indication information includes configuration information of the indirect path.

In an optional implementation, the SCG information element includes the special cell configuration information element, the special cell configuration information element includes a reconfiguration with sync information element, and the reconfiguration with sync information element includes the fourth indication information.

For technical effects brought by the eighth aspect or any one of the optional implementations, refer to descriptions of technical effects brought by the third aspect or corresponding implementations.

According to a ninth aspect, a ninth communication method is provided. The method may be performed by a terminal device, or may be performed by another device that includes a function of the terminal device, or may be performed by a chip system (or a chip) or another functional module. The chip system or the functional module can implement the function of the terminal device. The chip system or the functional module is, for example, disposed in the terminal device. Optionally, the terminal device is, for example, a remote terminal device. The method includes: receiving an RRC reconfiguration message from an access network device, where the RRC reconfiguration message includes fifth indication information, the fifth indication information indicates to release a first path, the remote terminal device is connected to a network through a second path, the first path is a direct path for connecting the remote terminal device and a first cell of the access network device, and the second path is an indirect path for connecting the remote terminal device and a second cell via a relay terminal device; or the first path is an indirect path for connecting the remote terminal device and a second cell via a relay terminal device, and the second path is a direct path for connecting the remote terminal device and a first cell of the access network device; and releasing the first path based on the RRC reconfiguration message, and skipping releasing the second path.

In an optional implementation, if the first path is the direct path, and the second path is the indirect path, the fifth indication information specifically indicates not to release the second path.

In an optional implementation, the RRC reconfiguration message includes an MCG information element, and the MCG information element includes the fifth indication information.

In an optional implementation, that the MCG information element includes the fifth indication information includes: if the first path is the direct path, and the second path is the indirect path, the MCG information element includes a special cell configuration information element, the special cell configuration information element includes a reconfiguration with sync information element, the reconfiguration with sync information element includes a sidelink path switch configuration information element, and the sidelink path switch configuration information element includes the fifth indication information.

In an optional implementation, if the first path is the direct path, and the second path is the indirect path, the RRC reconfiguration message further includes sixth indication information, and the sixth indication information indicates PDCP entity re-establishment or data recovery.

In an optional implementation, if the first path is the indirect path, and the second path is the direct path, that the MCG information element includes the fifth indication information includes: the MCG information element includes a special cell configuration information element, the special cell configuration information element includes a reconfiguration with sync information element, and the reconfiguration with sync information element includes the fifth indication information; the MCG information element includes a secondary cell configuration information element, and the secondary cell configuration information element includes the fifth indication information; or the MCG information element includes a special cell configuration information element and a secondary cell configuration information element, the special cell configuration information element includes the fifth indication information and configuration information of the direct path, and the secondary cell configuration information element includes configuration information of the indirect path.

In an optional implementation, if the MCG information element includes the secondary cell configuration information element, and the secondary cell configuration information element includes the fifth indication information, and if the remote terminal device is further connected to a cell corresponding to the first path through another path, the fifth indication information specifically indicates to release the first path; or if the remote terminal device is connected to a cell corresponding to the first path only through the first path, the fifth indication information specifically indicates to release a secondary cell corresponding to the secondary cell configuration information element.

In an optional implementation, that the fifth indication information indicates to release the first path includes: the fifth indication information specifically indicates to release an SCG in which a cell corresponding to the first path is located; the fifth indication information indicates to release an MCG in which a cell corresponding to the first path is located; or the fifth indication information includes first sub information and second sub information, the first sub information indicates to change, to a new SCG, an MCG in which a cell corresponding to the first path is located, and indicates to change an original SCG to a new MCG, and the second sub information indicates to release the new SCG.

For technical effects brought by the ninth aspect or any one of the optional implementations, refer to descriptions of technical effects brought by the fourth aspect or corresponding implementations.

According to a tenth aspect, a tenth communication method is provided. The method may be performed by a terminal device, or may be performed by another device that includes a function of the terminal device, or may be performed by a chip system (or a chip) or another functional module. The chip system or the functional module can implement the function of the terminal device. The chip system or the functional module is, for example, disposed in the terminal device. Optionally, the terminal device is, for example, a remote terminal device. The method includes: receiving an RRC reconfiguration message from an access network device, where the RRC reconfiguration message includes seventh indication information, the seventh indication information indicates to modify an indirect path for connecting the remote terminal device and a second cell via a relay terminal device, the RRC reconfiguration message further includes an association relationship between configuration information of an RLC entity of the remote terminal device and an identifier of the relay terminal device, and includes an association relationship between configuration information of an SRAP entity of the remote terminal device and the identifier of the relay terminal device, and the remote terminal device is connected to a first cell through a direct path; and modifying the indirect path based on the RRC reconfiguration message, and skipping modifying the direct path.

In an optional implementation, the RRC reconfiguration message includes an MCG information element, and the MCG information element includes the seventh indication information.

In an optional implementation, that the MCG information element includes the seventh indication information includes: the MCG information element includes a special cell configuration information element, the special cell configuration information element includes a reconfiguration with sync information element, and the seventh indication information is included in the reconfiguration with sync information element; or the MCG information element includes a secondary cell configuration information element, the secondary cell configuration information element includes a reconfiguration with sync information element, the seventh indication information is included in the reconfiguration with sync information element, and the seventh indication information specifically indicates to modify the indirect path or modify a secondary cell corresponding to the secondary cell configuration information element.

In an optional implementation, modifying a first path is adding the first path or releasing the first path.

In an optional implementation, the seventh indication information includes configuration information of the first path.

For technical effects brought by the tenth aspect or any one of the optional implementations, refer to descriptions of technical effects brought by the fifth aspect or corresponding implementations.

According to an eleventh aspect, a communication apparatus is provided. The communication apparatus may be the access network device according to any one of the first aspect to the tenth aspect. The communication apparatus has a function of the access network device. The communication apparatus is, for example, an access network device, a large device including the access network device, or a functional module in the access network device, for example, a baseband apparatus or a chip system. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

In an optional implementation, the processing unit is configured to determine to add, for a remote terminal device, a direct path for connecting a first cell, where the remote terminal device is connected to a second cell through an indirect path. The transceiver unit (or the sending unit) is configured to send an RRC reconfiguration message to the remote terminal device, where the RRC reconfiguration message indicates the remote terminal device to switch to the direct path, the RRC reconfiguration message further includes first indication information, and the first indication information indicates not to release the indirect path.

In an optional implementation, the processing unit is configured to determine to add, for a remote terminal device, an indirect path for connecting a second cell via a relay terminal device, where the remote terminal device is connected to a first cell through a direct path. The transceiver unit (or the sending unit) is configured to send an RRC reconfiguration message to the remote terminal device, where the RRC reconfiguration message includes third indication information, and the third indication information indicates to add the indirect path.

In an optional implementation, the processing unit is configured to determine to add a first path for a remote terminal device, where the remote terminal device is connected to a network through a second path, the first path is a direct path for connecting the remote terminal device and a first cell of the access network device, and the second path is an indirect path for connecting the remote terminal device and a second cell via a relay terminal device; or the first path is an indirect path for connecting the remote terminal device and a second cell via a relay terminal device, and the second path is a direct path for connecting the remote terminal device and a first cell of the access network device. The transceiver unit (or the sending unit) is configured to send an RRC reconfiguration message to the remote terminal device, where the RRC reconfiguration message indicates the remote terminal device to add the first path to an SCG.

In an optional implementation, the processing unit is configured to determine to release a first path for a remote terminal device, where the remote terminal device is connected to a network through a second path, the first path is a direct path for connecting the remote terminal device and a first cell of the access network device, and the second path is an indirect path for connecting the remote terminal device and a second cell via a relay terminal device; or the first path is an indirect path for connecting the remote terminal device and a second cell via a relay terminal device, and the second path is a direct path for connecting the remote terminal device and a first cell of the access network device. The transceiver unit (or the sending unit) is configured to send an RRC reconfiguration message to the remote terminal device, where the RRC reconfiguration message includes fifth indication information, and the fifth indication information indicates to release the first path.

In an optional implementation, the processing unit is configured to determine to modify an indirect path for connecting a remote terminal device and a second cell via a relay terminal device, where the remote terminal device is connected to a first cell through a direct path. The transceiver unit (or the sending unit) is configured to send an RRC reconfiguration message to the remote terminal device, where the RRC reconfiguration message includes seventh indication information, the seventh indication information indicates to modify the indirect path, and the RRC reconfiguration message further includes an association relationship between configuration information of an RLC entity of the remote terminal device and an identifier of the relay terminal device, and includes an association relationship between configuration information of an SRAP entity of the remote terminal device and the identifier of the relay terminal device.

In an optional implementation, the communication apparatus further includes a storage unit (also referred to as a storage module sometimes), and the processing unit is configured to: be coupled to the storage unit, and execute a program or instructions in the storage unit, to enable the communication apparatus to perform a function of the access network device according to any one of the first aspect to the tenth aspect.

According to a twelfth aspect, a communication apparatus is provided. The communication apparatus may be the remote terminal device according to any one of the first aspect to the tenth aspect. The communication apparatus has a function of the remote terminal device. The communication apparatus is, for example, a remote terminal device, a large device including a remote terminal device, or a functional module in a remote terminal device, for example, a baseband apparatus or a chip system. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the descriptions in the eleventh aspect.

In an optional implementation, the transceiver unit (or a receiving unit) is configured to receive an RRC reconfiguration message from an access network device, where the RRC reconfiguration message indicates the remote terminal device to switch to a direct path for connecting a first cell, the remote terminal device is connected to a second cell through an indirect path, the RRC reconfiguration message further includes first indication information, and the first indication information indicates not to release the indirect path. The processing unit is configured to: add the direct path based on the RRC reconfiguration message, and skip releasing the indirect path.

In an optional implementation, the transceiver unit (or a receiving unit) is configured to receive an RRC reconfiguration message from an access network device, where the RRC reconfiguration message includes third indication information, the third indication information indicates to add an indirect path for connecting a second cell via a relay terminal device, and the remote terminal device is connected to a first cell through a direct. The processing unit is configured to add the indirect path based on the RRC reconfiguration message, and skip releasing the direct path.

In an optional implementation, the transceiver unit (or a receiving unit) is configured to receive an RRC reconfiguration message from an access network device, where the RRC reconfiguration message indicates the remote terminal device to add a first path to an SCG, the remote terminal device is connected to a network through a second path, the first path is a direct path for connecting the remote terminal device and a first cell of the access network device, and the second path is an indirect path for connecting the remote terminal device and a second cell via a relay terminal device; or the first path is an indirect path for connecting the remote terminal device and a second cell via a relay terminal device, and the second path is a direct path for connecting the remote terminal device and a first cell of the access network device. The processing unit is configured to: add the first path to the SCG based on the RRC reconfiguration message, and skip releasing the second path.

In an optional implementation, the transceiver unit (or a receiving unit) is configured to receive an RRC reconfiguration message from an access network device, where the RRC reconfiguration message includes fifth indication information, the fifth indication information indicates to release a first path, the remote terminal device is connected to a network through a second path, the first path is a direct path for connecting the remote terminal device and a first cell of the access network device, and the second path is an indirect path for connecting the remote terminal device and a second cell via a relay terminal device; or the first path is an indirect path for connecting the remote terminal device and a second cell via a relay terminal device, and the second path is a direct path for connecting the remote terminal device and a first cell of the access network device. The processing unit is configured to: release the first path based on the RRC reconfiguration message, and skip releasing the second path.

In an optional implementation, the transceiver unit (or a receiving unit) is configured to receive an RRC reconfiguration message from an access network device, where the RRC reconfiguration message includes seventh indication information, the seventh indication information indicates to modify an indirect path for connecting the remote terminal device and a second cell via a relay terminal device, the RRC reconfiguration message further includes an association relationship between configuration information of an RLC entity of the remote terminal device and an identifier of the relay terminal device, and includes an association relationship between configuration information of an SRAP entity of the remote terminal device and the identifier of the relay terminal device, and the remote terminal device is connected to a first cell through a direct path. The processing unit is configured to: modify the indirect path based on the RRC reconfiguration message, and skip modifying the direct path.

In an optional implementation, the communication apparatus further includes a storage unit (also referred to as a storage module sometimes), and the processing unit is configured to be coupled to the storage unit, and execute a program or instructions in the storage unit, to enable the communication apparatus to perform a function of the remote terminal device according to any one of the first aspect to the tenth aspect.

According to a thirteenth aspect, a communication system is provided, including the communication apparatus according to the eleventh aspect and the communication apparatus according to the twelfth aspect.

According to a fourteenth aspect, a computer-readable storage medium is provided. The computer-readable storage medium is configured to store a computer program or instructions. When the computer program or the instructions is/are run, the method performed by the access network device or the remote terminal device in the foregoing aspects is implemented.

According to a fifteenth aspect, a computer program product including instructions is provided. When the computer program product runs on a computer, the methods in the foregoing aspects are implemented.

According to a sixteenth aspect, a chip system is provided, including a processor and an interface. The processor is configured to invoke instructions from the interface and run the instructions, to enable the chip system to implement the methods in the foregoing aspects.

### BRIEF DESCRIPTION OF DRAWINGS

FIG. 1 is a schematic of a protocol stack between a UE and a base station;
FIG. 2 is a diagram of an RRC reconfiguration message for a UE to configure a direct path;
FIG. 3A and FIG. 3B each are a schematic of a protocol stack between devices in a relay scenario;
FIG. 4 is a diagram of an RRC reconfiguration message used when a UE is configured to switch from a direct path to an indirect path;
FIG. 5A and FIG. 5B are diagrams of two application scenarios according to embodiments of this application;
FIG. 6, FIG. 8, FIG. 10, FIG. 12, FIG. 14, and FIG. 16 are flowcharts of several communication methods according to embodiments of this application;
FIG. 7A to FIG. 7E, FIG. 9A and FIG. 9B, FIG. 11A and FIG. 11B, FIG. 13A and FIG. 13B, FIG. 15A to FIG. 15H, and FIG. 17A to FIG. 17D are several diagrams of RRC reconfiguration messages according to embodiments of this application;
FIG. 13C and FIG. 13D are two diagrams of adding a path according to embodiments of this application;
FIG. 15I and FIG. 15J are two diagrams of releasing a path according to embodiments of this application;
FIG. 18 is a diagram of an apparatus according to an embodiment of this application; and
FIG. 19 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, and may be widely used in various scenarios. For example, the terminal device includes but is not limited to terminal devices in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), smart furniture, a smart office, a smart wearable, smart transportation, a smart city (smart city), an uncrewed aerial vehicle, a robot, and the like. The terminal device may be sometimes referred to as a user equipment (user equipment, UE), a terminal, an access station, a UE station, a remote station, a wireless communication device, a user apparatus, or the like. For ease of description, in embodiments of this application, an example in which the terminal device is the UE is used for description.

In embodiments of this application, a path for the UE to communicate with an access network device through a Uu interface is referred to as a direct path, and a path for the UE to be connected to the access network device via a relay UE is referred to as an indirect path.

A network device in embodiments of this application may include, for example, an access network device and/or a core network device. The access network device is a device having a wireless transceiver function, and is configured to communicate with the terminal device. The access network device includes but is not limited to a base station (base transceiver station (base transceiver station, BTS), a NodeB, an eNodeB/eNB, or a gNodeB/gNB), a transmission reception point (transmission reception point, TRP), a base station subsequently evolved in a 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks of a same access technology, or may support networks of different access technologies. The base station may include one or more co-site or non-co-site transmission reception points. The access network device may alternatively be a radio controller, a central unit (central unit, CU), and/or a distributed unit (distributed unit, DU) in a cloud radio access network (cloud radio access network, CRAN) scenario. The access network device may alternatively be a server or the like. For example, an access network device in a vehicle-to-everything (vehicle-to-everything, V2X) technology may be a roadside unit (roadside unit, RSU). The following uses an example in which the access network device is the base station for description. The base station may communicate with the terminal device, or may communicate with the terminal device via a relay station. The terminal device may communicate with a plurality of base stations in different access technologies. The core network device is configured to implement functions such as mobility management, data processing, session management, and policy and charging control. Names of devices that implement core network functions in systems of different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be installed in the network device In the technical solutions provided in embodiments of this application, an example in which the apparatus configured to implement the function of the network device is the network device is used for describing the technical solutions provided in embodiments of this application.

In embodiments of this application, unless otherwise specified, a quantity of nouns indicates "a singular noun or a plural noun", that is, "one or more". "At least one" means one or more, and "a plurality of" means two or more. The term "and/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numerals such as "first" and "second" mentioned in embodiments of this application are used to distinguish between a plurality of objects, and are not intended to limit sizes, content, a sequence, a time sequence, priorities, importance degrees, or the like of the plurality of objects. For example, a first cell and a second cell may be a same cell, or may be different cells. In addition, the names do not indicate that positions, coverage ranges, corresponding access network devices, priorities, importance degrees, or the like of the two cells are different. In addition, step numbers in embodiments described in this application are merely used to distinguish between different steps, but are not used to limit a sequence of the steps. For example, S601 may be performed before S602, or may be performed after S602, or may be performed at the same time with S602.

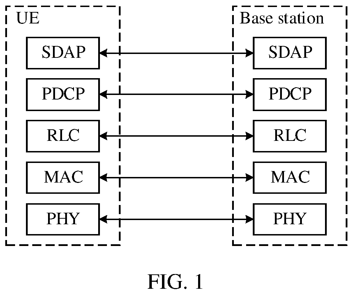

To transmit control signaling and data, a corresponding signaling radio bearer (signaling radio bearer, SRB) and a corresponding data radio bearer (data radio bearer, DRB) are established on the base station and the UE, and are used as transmission channels. For the direct path for the UE to communicate with the base station through the Uu interface, refer to FIG. 1. The direct path is a DRB peer protocol stack used to transmit user plane data. Both the UE and the base station include a physical (PHY) layer, a media access control (media access control, MAC) layer, a radio link control (radio link control, RLC) layer, a packet data convergence protocol (packet data convergence protocol, PDCP) layer, a service data adaptation protocol (service data adaptation protocol, SDAP) layer, and the like. A "layer" may alternatively be replaced with an "entity". For example, the PDCP layer may also be referred to as a PDCP entity, and the RLC layer may also be referred to as an RLC entity.

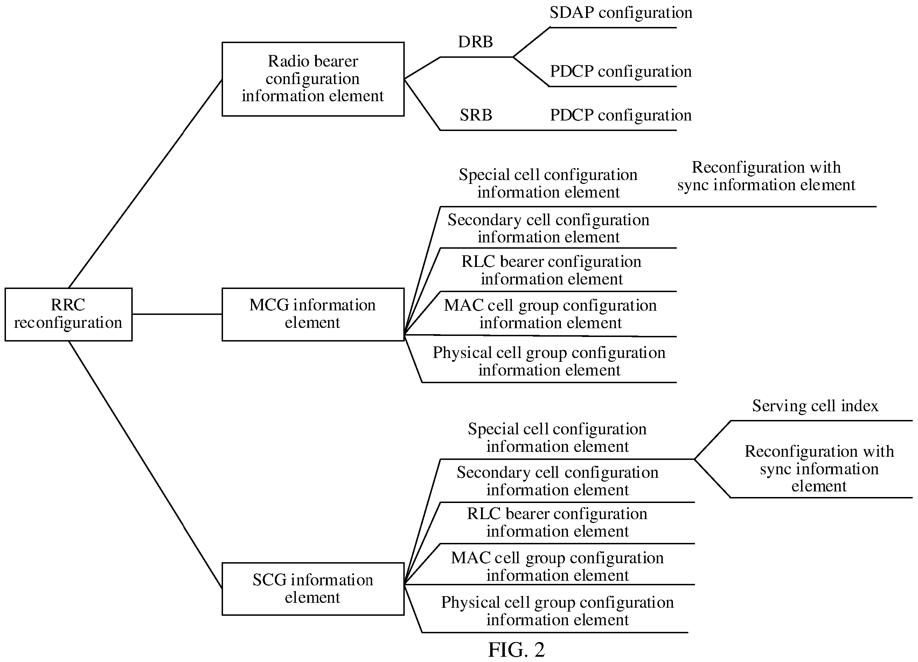

Currently, the base station may configure, by using a radio resource control (radio resource control, RRC) reconfiguration (reconfiguration) message, the UE to switch a Uu interface cell, or add the Uu interface cell (in other words, configure dual connectivity for the UE). Alternatively, if the base station configures a remote UE to switch from the indirect path to the direct path, a RRC reconfiguration message may be used for the configuration. FIG. 2 is a diagram of information elements included in the RRC reconfiguration message. A radio bearer configuration (radioBearerConfig) information element included in the RRC reconfiguration message may be used to configure PDCP entities and an upper-layer entity (for example, an SDAP entity) of the SRB and the DRB. In an NR dual connectivity (NR dual connectivity) scenario, an RLC entity and lower-layer entities (for example, a MAC entity and a PHY entity) are separately configured by using a master cell group (master cell group, MCG) information element and a secondary cell group (secondary cell group, SCG) information element that are included in the RRC reconfiguration message. For example, in FIG. 2, both the MCG information element and the SCG information element include an RLC bearer configuration (RLC-BearerConfig) information element, a MAC cell group configuration (MAC-CellGroupConfig) information element, and a physical cell group configuration (physicalCellGroupConfig) information element. Both an MCG and an SCG may include a special cell (special cell, SpCell) and a secondary cell (secondary cell, SCell). Therefore, both the MCG information element and the SCG information element may further include an SpCell configuration (SpCellConfig) information element and an SCell configuration (SCellConfig) information element. In FIG. 2, when the UE is configured to switch the MCG, the SpCell configuration information element of the MCG information element may further include a reconfiguration with sync information element (ReconfigurationWithSync). In addition, the SpCell configuration information element of the MCG information element may further include information about the direct path, for example, include a cell ID of the direct path, and the reconfiguration with sync information element may further include configuration information of the cell. When the UE is configured to add the SCG or is configured to switch the SCG, the SpCell configuration information element of the SCG information element may further include a serving cell index (servCellindex) and a reconfiguration with sync information element. The SpCell may include a PCell in the MCG and a primary secondary cell (primary secondary cell, PSCell) in the SCG.

For example, the remote UE currently maintains the indirect path for communicating with the base station via a relay UE, and does not maintain the direct path. If the remote UE receives the RRC reconfiguration message shown in FIG. 2, the remote UE may be handed over to a cell corresponding to the direct path based on the information that is about the direct path and that is included in the SpCell configuration information element of the MCG information element, and the remote UE releases the originally maintained indirect path.

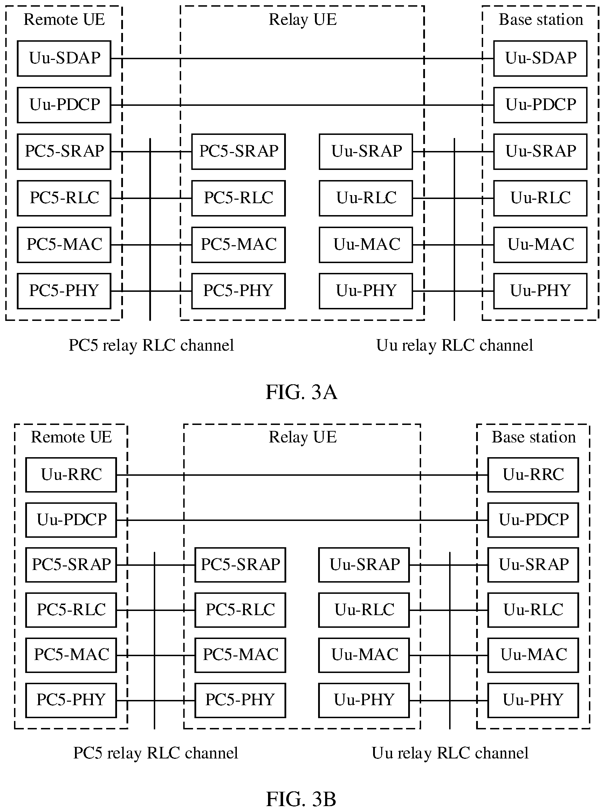

FIG. 3A and FIG. 3B show protocol stacks related to the remote UE, the relay UE, and the base station in a relay scenario. FIG. 3A shows a user plane protocol stack, and FIG. 3B shows a control plane protocol stack.

In the user plane protocol stack, both the remote UE and the base station include an SDAP entity (represented as a Uu-SDAP entity in FIG. 3A) used for communication on a Uu interface and a PDCP entity (represented as a Uu-PDCP entity in FIG. 3A) used for communication on the Uu interface. In addition, the remote UE further includes an SRAP entity (represented as a PC5-SRAP entity in FIG. 3A) used for communication on a PC5 interface, an RLC entity (represented as a PC5-RLC entity in FIG. 3A) used for communication on the PC5 interface, a MAC entity (represented as a PC5-MAC entity in FIG. 3A) used for communication on the PC5 interface, and a PHY entity (represented as a PC5-PHY entity in FIG. 3A) used for communication on the PC5 interface. The base station further includes an SRAP entity (represented as a Uu-SRAP entity in FIG. 3A) used for communication on the Uu interface, an RLC entity (represented as a Uu-RLC entity in FIG. 3A) used for communication on the Uu interface, a MAC entity (represented as a Uu-MAC entity in FIG. 3A) used for communication on the Uu interface, and a PHY entity (represented as a Uu-PHY entity in FIG. 3A) used for communication on the Uu interface. Because the relay UE needs to communicate with both the remote UE and the base station, the relay UE includes an entity used for communication on the PC5 interface and an entity used for communication on the Uu interface. The relay UE includes the following entities used for communication on the PC5 interface: an SRAP entity (represented as a PC5-SRAP entity in FIG. 3A), an RLC entity (represented as a PC5-RLC entity in FIG. 3A), a MAC entity (represented as a PC5-MAC entity in FIG. 3A), and a PHY entity (represented as a PC5-PHY entity in FIG. 3A). The relay UE includes the following entities used for communication on the Uu interface: an SRAP entity (represented as a Uu-SRAP entity in FIG. 3A), an RLC entity (represented as a Uu-RLC entity in FIG. 3A), a MAC entity (represented as a Uu-MAC entity in FIG. 3A), and a PHY entity (represented as a Uu-PHY entity in FIG. 3A). The remote UE may communicate with the relay UE through a PC5 relay RLC channel/bearer (PC5 relay RLC channel/bearer), and the relay UE may communicate with the base station through a Uu relay RLC channel/bearer (Uu relay RLC channel/bearer).

In the control plane protocol stack, both the remote UE and the base station include an RRC entity (represented as a Uu-RRC entity in FIG. 3B) used for communication on a Uu interface and a PDCP entity (represented as a Uu-PDCP entity in FIG. 3B) used for communication on the Uu interface. In addition, the remote UE further includes an SRAP entity (represented as a PC5-SRAP entity in FIG. 3B) used for communication on a PC5 interface, an RLC entity (represented as a PC5-RLC entity in FIG. 3B) used for communication on the PC5 interface, a MAC entity (represented as a PC5-MAC entity in FIG. 3B) used for communication on the PC5 interface, and a PHY entity (represented as a PC5-PHY entity in FIG. 3B) used for communication on the PC5 interface. The base station further includes an SRAP entity (represented as a Uu-SRAP entity in FIG. 3B) used for communication on the Uu interface, an RLC entity (represented as a Uu-RLC entity in FIG. 3B) used for communication on the Uu interface, a MAC entity (represented as a Uu-MAC entity in FIG. 3B) used for communication on the Uu interface, and a PHY entity (represented as a Uu-PHY entity in FIG. 3B) used for communication on the Uu interface. Because the relay UE needs to communicate with both the remote UE and the base station, the relay UE includes an entity used for communication on the PC5 interface and an entity used for communication on the Uu interface. The relay UE includes the following entities used for communication on the PC5 interface: an SRAP entity (represented as a PC5-SRAP entity in FIG. 3B), an RLC entity (represented as a PC5-RLC entity in FIG. 3B), a MAC entity (represented as a PC5-MAC entity in FIG. 3B), and a PHY entity (represented as a PC5-PHY entity in FIG. 3B). The relay UE includes the following entities used for communication on the Uu interface: an SRAP entity (represented as a Uu-SRAP entity in FIG. 3B), an RLC entity (represented as a Uu-RLC entity in FIG. 3B), a MAC entity (represented as a Uu-MAC entity in FIG. 3B), and a PHY entity (represented as a Uu-PHY entity in FIG. 3B). The remote UE may communicate with the relay UE through a PC5 relay RLC channel, and the relay UE may communicate with the base station through a Uu relay RLC channel.

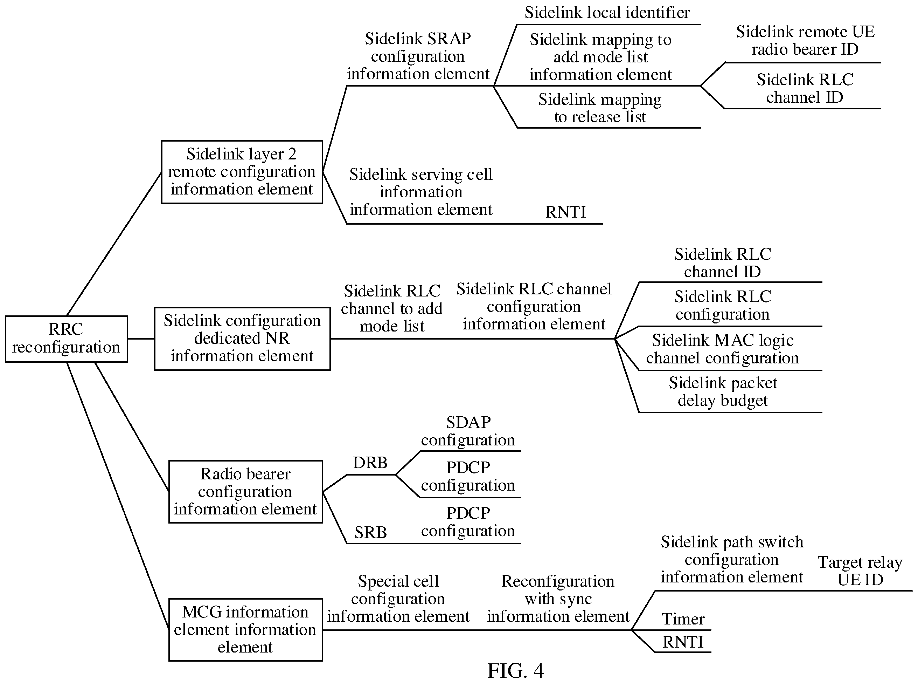

Currently, the base station may configure, by using the RRC reconfiguration message, the remote UE to switch from the direct path to the indirect path. FIG. 4 is a diagram of information elements included in the RRC reconfiguration message. The RRC reconfiguration message may indicate information about the relay UE corresponding to the indirect path by using the reconfiguration with sync information element in the SpCell configuration information element of the MCG information element. It can be learned from FIG. 4 that the reconfiguration with sync information element includes a sidelink path switch configuration (sl-PathSwitchConfig) information element. The sidelink path switch configuration information element may include a target relay UE ID (targetRelayUEIdentity) and other information, for example, information about a corresponding timer. The timer includes, for example, a timer T420 and/or a timer T304. The timer T420 is a timer used when the remote UE performs path switching, and is started when the remote UE performs path switching, to determine whether the path switching succeeds. In addition, the reconfiguration with sync information element may further configure, for the remote UE, a radio network temporary identifier (radio network temporary identifier, RNTI) and the like applied on the indirect path. When the remote UE switches from the direct path to the indirect path, the timer T304 is not started. The RRC reconfiguration message further includes a sidelink layer 2 remote configuration (SL-L2RemoteConfig) information element and a sidelink configuration dedicated NR (sl-ConfigDedicatedNR) information element. The sidelink layer 2 remote configuration information element may be used to configure a PC5-SRAP entity, and configure a correspondence between a Uu bearer (a DRB and/or an SRB) and a PC5-RLC entity.

It can be learned from FIG. 4 that, the sidelink layer 2 remote configuration information element may include a sidelink SRAP configuration (SL-SRAP-Config) information element. The sidelink SRAP configuration information element may include a sidelink local identifier (sl-LocalIdentity), a sidelink mapping to add mode list (sl-MappingToAddModList) information element, and a sidelink mapping to release list (sl-MappingToReleaseList) information element. The sidelink mapping to add mode list information element further includes a sidelink remote UE radio bearer identifier (sl-RemoteUE-RB-Identity) and a sidelink RLC channel identifier (SL-RLC-ChannelID). In addition, the sidelink layer 2 remote configuration information element may further include a sidelink serving cell information (sl-ServingCellInfo) information element, including an RNTI, and optionally, may further include a physical cell identifier (physical cell identifier, PCI) and the like.

It can be learned from FIG. 4 that, the sidelink configuration dedicated NR information element may include a sidelink RLC channel to add mode list (sl-RLC-ChannelToAddModList) information element, including a sidelink RLC channel configuration (SL-RLC-ChannelConfig) information element. The sidelink RLC channel configuration information element may include a sidelink RLC channel ID (sl-RLC-ChannelID), a sidelink RLC configuration (sl-RLC-Config), a sidelink MAC logic channel configuration (sl-MAC-LogicChannelConfig), and a sidelink packet delay budget (sl-PacketDelayBudget). Information included in the sidelink configuration dedicated NR information element may be considered as information about the PC5-RLC entity, and the RRC reconfiguration message may include a radio bearer configuration information element. The radio bearer configuration information element configures a PDCP entity and an upper-layer entity, for example, configures a radio bearer corresponding to the PDCP entity (for more descriptions of the radio bearer configuration information element, refer to the foregoing descriptions), and the sidelink layer 2 remote configuration information element is equivalent to a configuration of the correspondence between the Uu bearer (the DRB and/or the SRB) configured by the radio bearer configuration information element and the PC5-RLC entity configured by the sidelink configuration dedicated NR information element.

For example, the remote UE currently maintains the direct path for communicating with the base station via the relay UE, and does not maintain the indirect path. If the remote UE receives the RRC reconfiguration message shown in FIG. 4, the remote UE may switch, based on the information such as an ID of the relay UE included in the sidelink path switch configuration information element, to the indirect path for communicating with the base station via the relay UE (where the indirect path is, for example, for the remote UE to establish a connection to the relay UE), and the remote UE releases the originally maintained direct path.

It can be learned that the remote UE may separately support two paths, where one path is a direct path for communicating with an access network device through a Uu interface, and the other path is an indirect path for communicating with the access network device via the relay UE. It can be learned from the foregoing descriptions that the base station may configure the remote UE to switch between the two paths. For example, when a signal of the direct path deteriorates, for example, is lower than a threshold, the access network device may indicate the remote UE to switch from the direct path to the indirect path; or when a signal of the indirect path deteriorates, for example, is lower than a threshold, the access network device may indicate the remote UE to switch from the indirect path to the direct path. Currently, even if the signal of the direct path and the signal of the indirect path of the remote UE can be used for communication, the remote UE can perform communication only through one path. Consequently, the remote UE cannot make better use of a resource to improve transmission reliability and stability, and resource utilization is reduced.

In view of this, technical solutions in embodiments of this application are provided. In embodiments of this application, when adding a path A, the remote UE may not release a maintained path B, to make better use of a resource. The remote UE may simultaneously maintain the two paths, to improve the transmission reliability and stability. In addition, considering that in a process of adding the path A, impact on transmission of the path B may be caused, in embodiments of this application, the impact on the path B may be reduced or avoided by using an indication. For example, when being indicated to switch to the direct path, the remote UE may further be indicated not to release the indirect path. In this case, the remote UE not only can add the direct path, but also does not need to release the maintained indirect path or change a configuration of the maintained path. In this way, the remote UE can simultaneously maintain the two paths. For the remote UE, because the indirect path does not need to be released, the transmission reliability and stability can be improved through the two paths, a change to the configuration of the maintained path is avoided or reduced, a delay caused by the configuration change to the maintained path is reduced, and user experience is improved.

The technical solutions provided in embodiments of this application may be applied to a 4th generation (4th generation, 4G) mobile communication technology system, for example, a long term evolution (long term evolution, LTE) system, or may be applied to a 5G system, for example, a new radio (new radio, NR) system, or may be applied to a next generation mobile communication system or another similar communication system. This is not specifically limited.

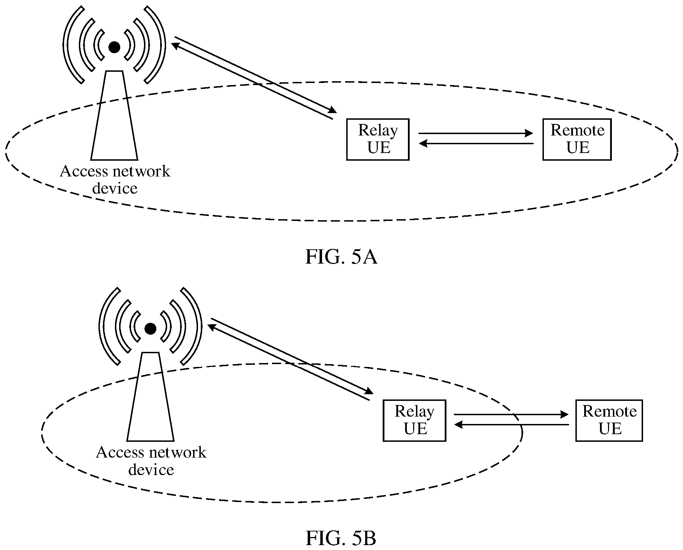

This application relates to a UE-to-network relay (UE-to-network relay) mechanism, and the mechanism may be used to improve coverage of a cellular network. FIG. 5A and FIG. 5B are diagrams of two application scenarios according to embodiments of this application. A relay UE is located within a coverage range of an access network device in a cellular network, in other words, the relay UE can directly communicate with the access network device through a Uu interface. A remote UE may communicate with the relay UE through a PC5 interface. For data, the remote UE may send the data to the relay UE, and then the relay UE forwards the data of the remote UE to the access network device through the Uu interface; or data that is from a core network and that is to be sent to the remote UE arrives at the access network device, the access network device sends the data to the relay UE through the Uu interface, and then the relay UE forwards the data to the remote UE through the PC5 interface. For signaling, the remote UE may send the signaling to the access network device via the relay UE; or the remote UE may receive signaling from the access network device via the relay UE. In FIG. 5A, the remote UE is also located within the coverage range of the access network device. In FIG. 5B, the remote terminal device is not located within the coverage range of the access network device.

To better describe embodiments of this application, the following describes methods provided in embodiments of this application with reference to the accompanying drawings. In the accompanying drawings corresponding to embodiments of this application, all steps represented by using dashed lines are optional steps. For ease of description, in embodiments of this application, an example in which a remote terminal device is a remote UE and a relay terminal device is a relay UE is used. The methods provided in embodiments of this application may be applied to a network architecture shown in FIG. 5A or FIG. 5B. For example, the remote UE in embodiments of this application is the remote UE in FIG. 5A or FIG. 5B, an access network device in embodiments of this application is the access network device in FIG. 5A or FIG. 5B, and the relay UE in embodiments of this application is the relay UE in FIG. 5A or FIG. 5B. It should be noted that in FIG. 5A and FIG. 5B, an example in which a direct path and an indirect path of the remote UE are for connecting a same access network device is used. However, in embodiments of this application, a cell on the direct path and a cell in which the relay UE is located on the indirect path may be a same cell, or may be different cells. If the cells are different cells, the two cells may belong to a same access network device, or may belong to different access network devices.

In embodiments of this application, an "entity" may alternatively be replaced with a "layer". For example, an "SRAP entity" may also be referred to as an "SRAP layer", and a "PDCP entity" may also be referred to as a "PDCP layer".

In embodiments of this application, the "direct path" is a path for the remote UE to communicate with the access network device (or a cell provided by the access network device) through a Uu interface without using the relay UE. The "indirect path" is a path for the remote UE to communicate with the access network device (or a cell provided by the access network device) via the relay UE. In addition, a "path" may alternatively be replaced with a "link". For example, the "direct path" may also be referred to as a "direct link", and the "indirect path" may also be referred to as an "indirect link".

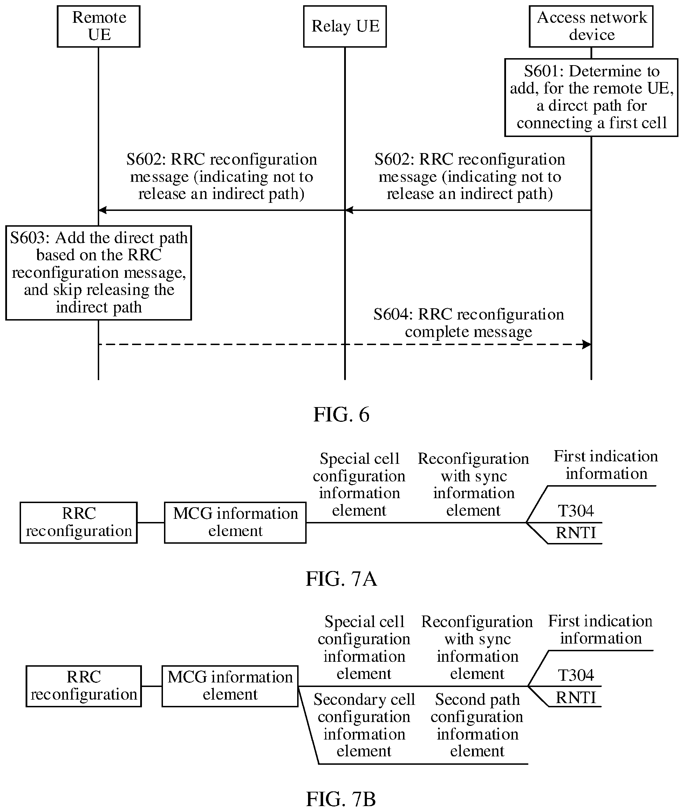

To resolve a technical problem to be resolved in this application, embodiments of this application provide a plurality of methods. In the following, FIG. 6 is a flowchart of a first communication method according to an embodiment of this application.

S601: An access network device determines to add, for a remote UE, a direct path for connecting a first cell. The first cell is, for example, a cell provided by the access network device. The remote UE is connected to a second cell through an indirect path; or it is understood as that the remote UE communicates with a second cell via a relay UE, or the remote UE has maintained an indirect path for connecting the second cell via the relay UE.

S602: The access network device sends an RRC reconfiguration message to the remote UE. Correspondingly, the remote UE receives the RRC reconfiguration message from the access network device. For example, the access network device may send the RRC reconfiguration message to the remote UE through the indirect path (for example, via the relay UE on the indirect path). Correspondingly, the remote UE may receive the RRC reconfiguration message from the access network device through the indirect path (via the relay UE on the indirect path). This is used as an example in FIG. 6.

The RRC reconfiguration message indicates the direct path of the first cell. If the RRC reconfiguration message indicates only the direct path, the remote UE may not be able to distinguish whether to switch to the direct path or add the direct path currently. In this case, the remote UE may perform a normal process of switching to the direct path, and release the indirect path. Therefore, in this embodiment of this application, the RRC reconfiguration message may further include first indication information. The first indication information may indicate not to release the indirect path, or indicate not to release configuration information of the indirect path, or indicate to keep the indirect path, or indicate to keep the configuration information of the indirect path. The remote UE may continue to keep the indirect path based on the first indication information. In this way, the remote UE can maintain the direct path and the indirect path.

Using the RRC reconfiguration message to add the direct path may be implemented in different manners. The following uses examples for description.
1. In a first implementation, the direct path is added in a manner of reconfiguring a PCell in an MCG of the remote UE.

For example, the RRC reconfiguration message may include an MCG information element, and the MCG information element may include the first indication information. In an implementation in which the MCG information element includes the first indication information, the MCG information element may include a special cell configuration information element, for example, an SpCellConfig information element. The special cell configuration information element may be used to reconfigure the PCell. Therefore, the special cell configuration information element may include the first indication information. For example, the special cell configuration information element may include a reconfiguration with sync information element, for example, ReconfigurationWithSync. The reconfiguration with sync information element may include the first indication information. For this, refer to FIG. 7A. For example, the first indication information may indicate that the indirect path is kept (IndirectKept), or may be other information.

For example, if the second cell is the PCell in the MCG of the remote UE, and the first cell and the second cell are a same cell, both the indirect path and the direct path are for connecting the first cell, and the first cell is also the PCell in the MCG of the remote UE. Therefore, the direct path may be added in the manner of reconfiguring the PCell, and the first indication information may be added to the reconfiguration with sync information element used to reconfigure the PCell. The first indication information may indicate not to release the indirect path. For example, when the MCG information element of the RRC reconfiguration message received by the remote UE includes the reconfiguration with sync information element, does not include a sidelink path switch configuration information element, and includes the first indication information, the remote UE may add the direct path, and keep a current indirect path, in other words, keep a related configuration of the relay UE corresponding to the indirect path. Alternatively, when the MCG information element of the RRC reconfiguration message received by the remote UE includes the reconfiguration with sync information element, does not include a sidelink path switch configuration information element, and does not include the first indication information, if the remote UE is connected to the relay UE (in other words, the remote UE has maintained the indirect path, where the relay UE may be a layer 2 (layer 2, L2) relay UE), the remote UE may switch to an indicated direct path, and release the connection to the relay UE (or release the indirect path). Still refer to FIG. 7A. In addition, the first indication information is not limited to being located in the reconfiguration with sync information element. Alternatively, the first indication information may be included in another information element included in the MCG information element.

For another example, if the second cell is the PCell in the MCG of the remote UE (that is, a serving cell of the relay UE connected to the remote UE), and the first cell and the second cell are different cells (for example, the first cell and the second cell are co-site cells or non-co-site cells), because an SpCell in a cell group is a cell with a complete function, it may be considered that a cell (the first cell) in which the direct path is located may be used as the PCell in the MCG of the remote UE as much as possible. Therefore, the direct path may also be added in the manner of reconfiguring the PCell. However, in this case, because the first cell is not the PCell originally, a cell change (cell change) or handover (handover) process may be performed, to change the first cell to the PCell of the remote UE. For example, the RRC reconfiguration message may include the reconfiguration with sync (reconfiguration with sync) information element, to indicate to switch the PCell. The RRC reconfiguration message may include information about the first cell, to switch the PCell of the remote UE from the second cell to the first cell. When the MCG information element of the RRC reconfiguration message received by the remote UE includes the reconfiguration with sync information element, does not include a sidelink path switch configuration information element, and includes the first indication information, the remote UE may add the direct path, and keep a current indirect path, in other words, keep a related configuration of the relay UE corresponding to the indirect path. Alternatively, when the MCG information element of the RRC reconfiguration message received by the remote UE includes the reconfiguration with sync information element, does not include a sidelink path switch configuration information element, and does not include the first indication information, if the remote UE is connected to the relay UE (in other words, the remote UE has maintained the indirect path, where the relay UE may be a layer 2 relay UE), the remote UE may switch to an indicated direct path, and release the connection to the relay UE (or release the indirect path). For the second cell corresponding to the indirect path, the second cell may be changed to an SCell (which may be an SCell in the MCG, or may be a PSCell or an SCell in an SCG) of the remote UE in a cell change manner, so that the direct path can be added in a manner of reconfiguring a new PCell.

When the second cell and the first cell are co-site cells, the cell change needs to be performed. For example, in a manner, a secondary cell configuration information element (for example, SCellConfig) of the MCG information element of the RRC reconfiguration message includes second indication information, and the special cell configuration information element of the MCG information element of the RRC reconfiguration message includes configuration information of the direct path and includes the first indication information. The second indication information may indicate to change the second cell from the PCell in the MCG of the remote UE to the SCell in the MCG. Optionally, the second indication information includes the configuration information of the indirect path. This is equivalent to associating the configuration information of the indirect path with the secondary cell configuration information element, and adding the configuration information of the direct path to the special cell configuration information element of the MCG information element. This is equivalent to indicating that the second cell in which the indirect path is located is used as the SCell, and the first cell in which the direct path is located is used as the PCell. For this, refer to FIG. 7B. For example, a secondary path configuration (secondarypathConfig) information element in FIG. 7B may include the configuration information of the indirect path. The configuration information of the indirect path includes, for example, an identifier (for example, an ID of the relay UE) of the relay UE corresponding to the indirect path, and the identifier of the relay UE is, for example, targetRelayUEIdentity. When the remote UE finds that the identifier of the relay UE is consistent with an identifier of a configured relay UE, an original indirect path may be maintained. Alternatively, the configuration information of the indirect path may not include an identifier of the relay UE corresponding to the indirect path. Because the indirect path is a configured path, if the configuration information of the indirect path does not include the identifier of the relay UE, the remote UE can determine that the indirect path is a configured indirect path. In addition, the configuration information of the indirect path may further include other information.

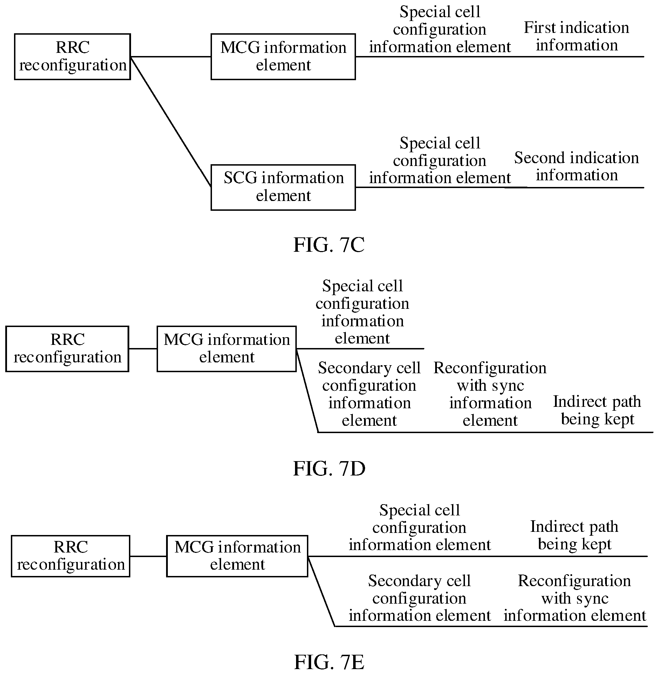

When the second cell and the first cell are non-co-site cells, the cell change needs to be performed. For example, in a manner, a special cell configuration information element (for example, SpCellConfig) of an SCG information element of the RRC reconfiguration message includes second indication information, and the special cell configuration information element of the MCG information element of the RRC reconfiguration message includes configuration information of the direct path and includes the first indication information. For this, refer to FIG. 7C. The second indication information may indicate to change the second cell from the PCell in the MCG of the remote UE to the PSCell in the SCG. Optionally, the second indication information includes the configuration information of the indirect path. This is equivalent to associating the configuration information of the indirect path with the special cell configuration information element of the SCG, and adding the configuration information of the direct path to the special cell configuration information element of the MCG information element. This is equivalent to indicating that the second cell in which the indirect path is located is used as the PSCell, and the first cell in which the direct path is located is used as the PCell. For example, the second indication information is a secondary path configuration (secondarypathConfig) information element. The secondary path configuration information element may include the configuration information of the indirect path. The configuration information of the indirect path includes, for example, an identifier (for example, an ID of the relay UE) of the relay UE corresponding to the indirect path, and the identifier of the relay UE is, for example, targetRelayUEIdentity. When the remote UE finds that the identifier of the relay UE is consistent with an identifier of a configured relay UE, it can be learned that an original indirect path may be maintained. Alternatively, the configuration information of the indirect path may not include an identifier of the relay UE corresponding to the indirect path. Because the indirect path is a configured path, if the configuration information of the indirect path does not include the identifier of the relay UE, the remote UE can determine that the indirect path is a configured indirect path. In addition, the configuration information of the indirect path may further include other information.

For another example, if a relationship between the first cell and the second cell is not considered, and a configuration may be performed in the manner of reconfiguring the PCell of the remote UE provided that the direct path is added, the direct path may also be added in the manner of reconfiguring the PCell. The reconfiguration with sync information element in the special cell configuration information element of the MCG information element indicates to switch or change the PCell of the remote UE to the first cell of the direct path. The reconfiguration with sync information element includes the first indication information, indicating that the indirect path of the remote UE is not released. When the MCG information element of the RRC reconfiguration message received by the remote UE includes the reconfiguration with sync information element, does not include a sidelink path switch configuration information element, and includes the first indication information, the remote UE may add the direct path, and keep a current indirect path, in other words, keep a related configuration of the relay UE corresponding to the indirect path. Alternatively, when the MCG information element of the RRC reconfiguration message received by the remote UE includes the reconfiguration with sync information element, does not include a sidelink path switch configuration information element, and does not include the first indication information, if the remote UE is connected to the relay UE (in other words, the remote UE maintains the indirect path, where the relay UE may be a layer 2 relay UE), the remote UE may switch to an indicated direct path, and release the connection to the relay UE (or release the indirect path). For this, still refer to FIG. 7A. In addition, the first indication information is not limited to being included in the reconfiguration with sync information element. Alternatively, for example, the first indication information may be included in another information element included in the MCG information element.

In addition, the special cell configuration information element of the MCG information element may further include the configuration information of the added direct path. For example, the configuration information of the direct path includes a parameter used by the remote UE to communicate in the first cell, for example, includes one or more of the following: an identifier (for example, an ID of the first cell) of the first cell, a random access parameter used by the remote UE to perform random access in the first cell, a timer T304, an RNTI, or a radio link monitoring (radio link monitoring, RLM) parameter used for the direct path. The RNTI may be used by the remote UE to monitor downlink control information (downlink control information, DCI) on a Uu interface. Alternatively, the parameter may not include an RLM parameter. For example, the remote UE may feed back a measurement result on the direct path through radio resource management (radio resource management, RRM) measurement, and the access network device may determine channel quality of the direct path (the first cell) based on the measurement result. The configuration information of the direct path may be directly included in the special cell configuration information element, or may be included in another information element (for example, the reconfiguration with sync information element) included in the special cell configuration information element; or some information (for example, the identifier of the first cell) of the configuration information of the direct path is directly included in the special cell configuration information element, and remaining information of the configuration information of the direct path is included in another information element (for example, the reconfiguration with sync information element) included in the special cell configuration information element. For example, in FIG. 7A, FIG. 7B, or FIG. 7C, the timer T304 and the RNTI are included in the reconfiguration with sync information element.

2. In a second implementation, the direct path is added in a manner of adding an SCell to an MCG of the remote UE.

This implementation may be applied to a case in which the first cell and the second cell belong to different co-site cells. The direct path is added in a manner of adding, as the SCell to an MCG information element of the remote UE, the first cell corresponding to the direct path. For example, the RRC reconfiguration message may include the MCG information element, and the MCG information element includes a secondary cell configuration information element, for example, SCellConfig. The secondary cell configuration information element may include configuration information of the added direct path. For example, the configuration information of the direct path includes a parameter used by the remote UE to communicate in the first cell. For descriptions of the parameter, refer to the foregoing descriptions. The configuration information of the direct path may be directly included in the secondary cell configuration information element, or may be included in another information element (for example, a reconfiguration with sync information element) included in the secondary cell configuration information element; or some information (for example, an identifier of the first cell) of the configuration information of the direct path is directly included in the secondary cell configuration information element, and remaining information of the configuration information of the direct path is included in another information element (for example, a reconfiguration with sync information element) included in the secondary cell configuration information element.

In addition, the MCG information element may further include the first indication information. Optionally, in an implementation in which the MCG information element includes the first indication information, the secondary cell configuration information element of the MCG information element includes the first indication information. For example, the secondary cell configuration information element includes the reconfiguration with sync information element, and the reconfiguration with sync information element includes the first indication information. For this, refer to FIG. 7D. Alternatively, in another implementation in which the MCG information element includes the first indication information, a special cell configuration information element of the MCG information element includes the first indication information. For this, refer to FIG. 7E. In both FIG. 7D and FIG. 7E, an example in which the first indication information indicates that the indirect path is kept is used.

For example, if the second cell is a PCell in the MCG of the remote UE, and the first cell and the second cell are different cells, the direct path may be added in the manner of adding the SCell. Different from the manner of reconfiguring the PCell shown in FIG. 7B, when the direct path is added in the manner of adding the SCell, roles of the PCell and the SCell may not need to be exchanged. In other words, the second cell is still the PCell, and the first cell is still the SCell. In this manner, the roles of the PCell and the SCell do not need to be exchanged. Therefore, the RRC reconfiguration message may not include configuration information of a configured indirect path, and implementation is simple, to help reduce transmission overheads of the RRC reconfiguration message.

Optionally, because a function of the SCell is generally not completed compared with that of the PCell, for example, the remote UE does not have an RLM function in the SCell, the remote UE may feed back a measurement result on the direct path through RRM measurement on the indirect path, and the access network device may determine channel quality of the direct path based on the measurement result. In addition, the SCell configuration information element (for example, SCellConfig) of the RRC reconfiguration message may alternatively include an RLM-related parameter, which is used for RLM when the direct path is the SCell in the MCG. For another example, the remote UE cannot monitor a beam in the SCell, and does not have a beam failure recovery (beam failure recovery, BFR) function. In this case, a related parameter of beam monitoring may be configured in the SCell configuration information element (for example, SCellConfig), to enable the remote UE to perform beam monitoring and recovery in the SCell corresponding to the direct path.

S603: The remote UE adds the direct path based on the RRC reconfiguration message, and does not release the indirect path.

Regardless of which implementation is used to add the direct path, after receiving the RRC reconfiguration message, the remote UE may add the direct path based on the configuration information of the direct path, and may not release the indirect path based on the first indication information, so that the remote UE can maintain the two paths. In an addition process, the remote UE performs random access in the first cell, to access the access network device corresponding to the first cell.

Optionally, because the function of the SCell is generally not completed compared with that of the PCell, for example, if the remote UE initiates the random access in the SCell, after the remote UE sends a random access preamble (preamble) in the SCell, the SCell may not be able to send a random access response (random access response, RAR) to the remote UE, and the remote UE may not be able to receive the RAR. Therefore, if the direct path is added in the manner of adding the SCell to the MCG of the remote UE, it may be specified that if the remote UE initiates the random access in the SCell (namely, the first cell), the PCell of the remote UE may send the RAR to the remote UE, and the remote UE may receive the RAR in the PCell, to complete the random access.

S604: The remote UE sends an RRC reconfiguration complete message to the access network device. Correspondingly, the access network device receives the RRC reconfiguration complete message sent by the remote UE.

In a possible implementation, after completing an RRC configuration, the remote UE and the access network device perform random access over a Uu interface in the first cell. After the random access succeeds, the remote UE sends the RRC reconfiguration complete message to the access network device through the direct path. This is used as an example in FIG. 6. In another possible implementation, after receiving a configuration, the remote UE sends the RRC reconfiguration complete message through the indirect path, in other words, sends the RRC reconfiguration complete message to the access network device via the relay UE.

After the direct path is successfully added, a PDCP entity of the remote UE may deliver a data packet to an RLC entity that is on the direct path and that is associated with the PDCP entity, to implement multipath transmission.

In this embodiment of this application, when indicating the remote UE to switch to the direct path, the access network device may also indicate not to release the indirect path. In this case, the remote UE not only can add the direct path, but also does not need to release the maintained indirect path. In this way, the remote UE can simultaneously maintain the two paths. For the remote UE, because the indirect path does not need to be released, a resource can be fully used. In addition, the remote UE may simultaneously maintain the two paths, to improve transmission stability and reliability. In addition, considering that in a process of adding a path, impact on transmission of an original path may be caused, in this embodiment of this application, the impact on the original path may be reduced or avoided by using an indication. For example, when being indicated to switch to the direct path, the remote UE may further be indicated not to release the indirect path. In this case, the remote UE not only can add the direct path, but also does not need to release the maintained indirect path or change a configuration of the maintained path. In this way, the remote UE can simultaneously maintain the two paths. For the remote UE, because the indirect path does not need to be released, the transmission reliability and stability can be improved through the two paths, a change to the configuration of the maintained path is avoided or reduced, a delay caused by the configuration change to the maintained path is reduced, and user experience is improved.

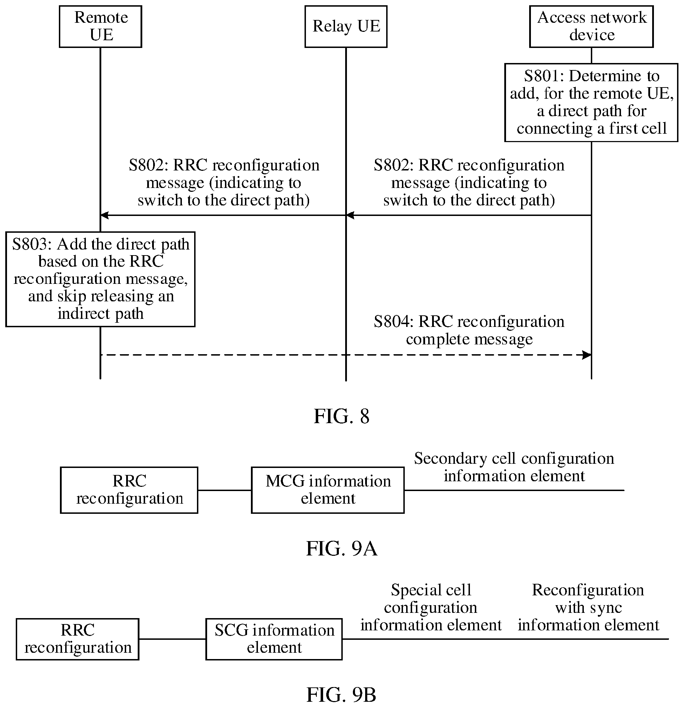

In the following, FIG. 8 is a flowchart of a second communication method according to an embodiment of this application.

S801: An access network device determines to add, for a remote UE, a direct path for connecting a first cell. The first cell is, for example, a cell provided by the access network device. The remote UE is connected to a second cell through an indirect path; or it is understood as that the remote UE has maintained an indirect path for connecting a second cell via a relay UE.

S802: The access network device sends an RRC reconfiguration message to the remote UE via the relay UE. Correspondingly, the remote UE receives the RRC reconfiguration message from the access network device via the relay UE. For example, the access network device may send the RRC reconfiguration message to the remote UE via the relay UE (or through the indirect path). Correspondingly, the remote UE receives the RRC reconfiguration message from the access network device via the relay UE (or through the indirect path). This is used as an example in FIG. 8. The RRC reconfiguration message may indicate the direct path of the first cell.

For example, if the second cell is a PCell in an MCG of the remote UE, and the first cell and the second cell are different cells, the direct path may be added in a manner of adding an SCell. In this embodiment of this application, when the direct path is added, roles of the PCell and the SCell may not need to be exchanged. In other words, the second cell is still the PCell, and the first cell is still the SCell. In this manner, the roles of the PCell and the SCell do not need to be exchanged. Therefore, the RRC reconfiguration message may not include configuration information of a configured indirect path, and implementation is simple, to help reduce transmission overheads of the RRC reconfiguration message.

When the second cell and the first cell are co-site cells, the first cell may be added as the direct path by using an SCell addition process. For example, refer to FIG. 9A. The RRC reconfiguration message may include an MCG information element, and the MCG information element includes a secondary cell configuration information element, for example, SCellConfig. The secondary cell configuration information element may include configuration information of the added direct path. For example, the configuration information of the direct path includes a parameter used by the remote UE to communicate in the first cell. For descriptions of the parameter, refer to the embodiment shown in FIG. 6. The configuration information of the direct path may be directly included in the secondary cell configuration information element, or may be included in another information element (for example, a reconfiguration with sync information element shown in the figure) included in the secondary cell configuration information element; or some information (for example, an identifier of the first cell) of the configuration information of the direct path is directly included in the secondary cell configuration information element, and remaining information of the configuration information of the direct path is included in another information element (for example, a reconfiguration with sync information element) included in the secondary cell configuration information element.

When the second cell and the first cell are non-co-site cells, the first cell may be added as the direct path by using a PSCell addition process of an SCG. For example, refer to FIG. 9B. The RRC reconfiguration message may include an SCG information element, and the SCG information element includes a special cell configuration information element, which indicates that the added first cell is a PSCell in the SCG. For more configuration information parameters, refer to the embodiment shown in FIG. 6. Configuration information of the direct path may be directly included in the special cell configuration information element in the SCG, or may be included in another information element (for example, a reconfiguration with sync information element shown in FIG. 9B) included in the special cell configuration information element in the SCG; or some information (for example, an identifier of the first cell) of configuration information of the direct path is directly included in the special cell configuration information element in the SCG, and remaining information of the configuration information of the direct path is included in another information element (for example, a reconfiguration with sync information element shown in FIG. 9B) included in the special cell configuration information element in the SCG.

Optionally, because a function of the SCell is generally not completed compared with that of the PCell, for example, the remote UE does not have an RLM function in the SCell, the remote UE may feed back a measurement result on the direct path through RRM measurement on the indirect path, and the access network device may determine channel quality of the direct path based on the measurement result. In addition, the SCell configuration information element (for example, SCellConfig) of the RRC reconfiguration message may alternatively include an RLM-related parameter, which is used for RLM when the direct path is the SCell in the MCG. For another example, the remote UE cannot monitor a beam in the SCell, and does not have a BFR function. In this case, a related parameter of beam monitoring may be configured in the SCell configuration information element (for example, SCellConfig), to enable the remote UE to perform beam monitoring and recovery in the SCell corresponding to the direct path.

S803: The remote UE adds the direct path based on the RRC reconfiguration message, and does not release the indirect path.

Because the indirect path has been configured in the PCell of the remote UE, and the remote UE receives the current RRC reconfiguration message, and finds that the secondary cell configuration information element of the MCG information element of the RRC reconfiguration message includes the configuration information of the direct path, it can be determined that the direct path needs to be added to a secondary cell this time. Therefore, the remote UE can add the direct path, and does not release the indirect link. It can be learned that the RRC reconfiguration message does not need to include additional indication information, and the remote UE may add the direct path and keep the indirect link based on the configuration information that is of the direct path and that is included in the secondary cell configuration information element, so that the transmission overheads of the RRC reconfiguration message can be reduced.

Optionally, because the function of the SCell is generally not completed compared with that of the PCell, for example, if the remote UE initiates random access in the SCell, after the remote UE sends a preamble in the SCell, the SCell may not be able to send a RAR to the remote UE, and the remote UE may not be able to receive the RAR. Therefore, if the direct path is added in the manner of adding the SCell to the MCG of the remote UE, it may be specified that if the remote UE initiates the random access in the SCell (namely, the first cell), the PCell of the remote UE may send the RAR to the remote UE, and the remote UE may receive the RAR in the PCell, to complete the random access.

After receiving the RRC reconfiguration message, the remote UE may add the direct path based on the configuration information of the direct path, and may not release the indirect path, so that the remote UE can maintain the two paths. In an addition process, the remote UE performs random access in the first cell, to access the access network device corresponding to the first cell.

S804: The remote UE sends an RRC reconfiguration complete message to the access network device. Correspondingly, the access network device receives the RRC reconfiguration complete message sent by the remote UE.

In a possible implementation, after completing a configuration indicated by the RRC reconfiguration message, the remote UE and the access network device perform random access over a Uu interface in the first cell. After the random access succeeds, the RRC reconfiguration complete message is sent to the access network device through the direct path. This is used as an example in FIG. 8. In another possible implementation, after receiving the RRC reconfiguration message, the remote UE sends the RRC reconfiguration complete message through the indirect path, in other words, sends the RRC reconfiguration complete message to the access network device via the relay UE.

After the direct path is successfully connected, and after the direct path is configured, a PDCP entity of the remote UE may deliver a data packet to an RLC entity that is on the direct path and that is associated with the PDCP entity, to implement multipath transmission.

In this embodiment of this application, the RRC reconfiguration message does not need to include additional indication information, so that the remote UE can maintain the two paths, and implementation is simple, to help reduce the transmission overheads.

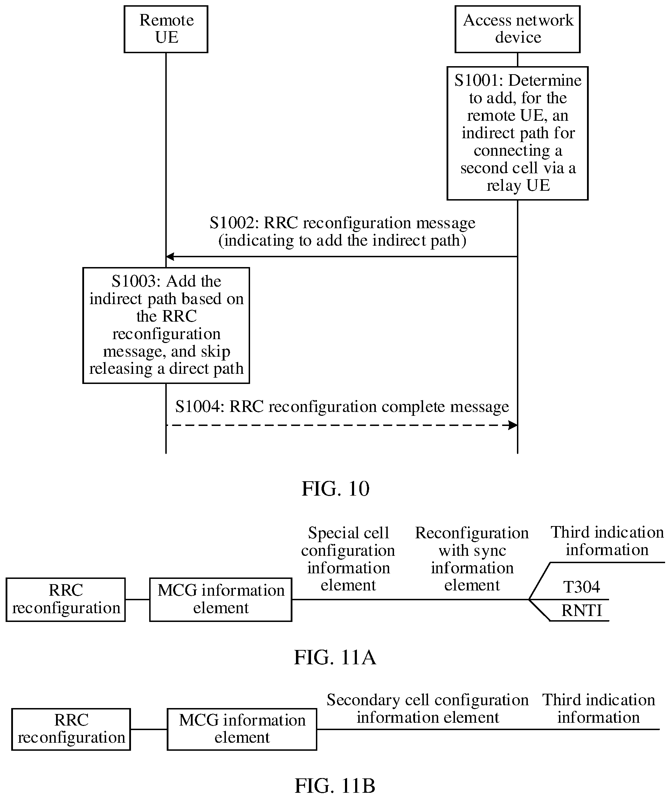

Some manners of adding the direct path are described in the embodiment shown in FIG. 6 and the embodiment shown in FIG. 8. In the following, FIG. 10 shows a third communication method according to this application. In the method, a manner of adding an indirect path according to an embodiment of this application is described.

S1001: An access network device determines to add, for a remote UE, the indirect path for connecting a second cell via a relay UE. The second cell is, for example, a cell provided by the access network device, or a cell provided by another access network device. The remote UE is connected to a first cell through a direct path; or it is understood as that the remote UE has maintained a direct path for connecting a first cell. The first cell is, for example, a cell provided by the access network device, or a cell provided by another access network device.

S1002: The access network device sends an RRC reconfiguration message to the remote UE. Correspondingly, the remote UE receives the RRC reconfiguration message from the access network device. The RRC reconfiguration message may indicate to add the indirect path. For example, the RRC reconfiguration message includes third indication information, and the third indication information may indicate to add the indirect path.

Optionally, in this embodiment of this application, a format of the RRC reconfiguration message that indicates to switch to the indirect path may be used, and the RRC reconfiguration message further includes the third indication information. The third indication information may enable the remote UE to determine that the indirect path is added this time, or enable the remote UE to determine not to release the direct path.

For example, the RRC reconfiguration message may include an MCG information element, and the MCG information element may include the third indication information.

Optionally, in an implementation in which the MCG information element includes the third indication information, the MCG information element may include a special cell configuration information element, for example, an SpCellConfig information element. The special cell configuration information element may include the third indication information. For example, the special cell configuration information element may include a reconfiguration with sync information element, for example, ReconfigurationWithSync. The reconfiguration with sync information element may include the third indication information. For this, refer to FIG. 11A. For example, when the MCG information element of the RRC reconfiguration message received by the remote UE includes the reconfiguration with sync information element, does not include a sidelink path switch configuration information element, and includes the third indication information, the remote UE may add the indirect path. For example, the remote UE may determine that a relay UE corresponding to a relay UE ID included in the RRC reconfiguration message is the relay UE on the indirect path. If the remote UE does not establish a PC5 connection to the relay UE, the remote UE may start to establish the PC5 connection to the relay UE, and does not disconnect a direct connection to the access network device. Alternatively, when the MCG information element of the RRC reconfiguration message received by the remote UE includes the reconfiguration with sync information element, includes a sidelink path switch configuration information element, and does not include the third indication information, the remote UE device determines to switch from a path to the indirect path. For example, the remote UE may determine that a relay UE corresponding to a relay UE ID included in the RRC reconfiguration message is the relay UE on the indirect path, and start a timer T420. If the remote UE does not establish a PC5 connection to the relay UE, the remote UE may start to establish the PC5 connection to the relay UE, and apply a default SL-RLC1 configuration (used for transmission of an SRB 1 of the remote UE).

For example, if the first cell is a PCell in an MCG of the remote UE, and the first cell and the second cell are a same cell, both the indirect path and the direct path are for connecting the first cell, and the first cell is the PCell in the MCG of the remote UE. In this case, the indirect path may be added in this implementation. For another example, a relationship between the first cell and the second cell may not be considered, and this manner may be used provided that the indirect path is added. When the indirect path is added in the manner of not considering the relationship between the first cell and the second cell, the PCell of the remote UE does not change, and is still the first cell. To indicate an identifier of an added second cell, the third indication information may include an identifier of the relay UE and the identifier of the second cell in which the relay UE is located. The remote UE may determine, based on the third indication information, to add the relay UE in the second cell, and that the first cell is still the PCell.

Alternatively, in another implementation in which the MCG information element includes the third indication information, the MCG information element may include a secondary cell configuration information element, for example, an SCellConfig information element. The secondary cell configuration information element may include the third indication information. The secondary cell configuration information element may include an identifier of a cell in which the relay UE is located. For this, refer to FIG. 11B. For example, if the first cell is a PCell in an MCG of the remote UE, and the first cell and the second cell are different co-site cells, it is equivalent to adding the indirect path to an SCell of the remote UE, and the indirect path may be added in this implementation. When the first cell and the second cell are non-co-site cells, the second cell on the indirect path may be added as a PSCell in an SCG.

In this embodiment of this application, the third indication information is, for example, referred to as a secondary path configuration, or may be other information. Optionally, the third indication information may include configuration information of the indirect path. The configuration information of the indirect path includes, for example, one or more of the following: the identifier of the relay UE corresponding to the indirect path, timer information used to determine whether the relay UE is successfully accessed, a timer T420, or an RNTI. The RNTI may be used by the remote UE to monitor DCI on a Uu interface. Alternatively, the remote UE may ignore the RNTI included in the RRC reconfiguration message, and continue to monitor DCI by using a previous RNTI (for example, a C-RNTI).

S1003: The remote UE adds the indirect path based on the RRC reconfiguration message, and does not release the direct path.

After receiving the RRC reconfiguration message, the remote UE may add the indirect path based on the configuration information of the indirect path. For example, the remote UE may request a relay service from the relay UE based on the identifier that is of the relay UE and that is included in the configuration information of the indirect path, and establish a PC5 connection. In addition, if the configuration information of the indirect link further includes the timer information used to determine whether the relay UE is successfully accessed, the remote UE may start the timer after receiving the timer information. Stop conditions of the timer include, for example, one or more of the following: The remote UE successfully transmits an RRC reconfiguration complete message through the added indirect path (where for example, when receiving an acknowledgment (ACK) that corresponds to the indirect path and that is fed back by a bottom layer (for example, a physical layer) of the remote UE, the remote UE determines that the RRC reconfiguration complete message is successfully transmitted through the added indirect path); or the remote UE successfully establishes the PC5 connection to the relay UE; or the remote UE receives feedback information of the relay UE, where the feedback information indicates that the relay UE has successfully performed random access to the second cell or has successfully established an RRC connection to the second cell.

S1004: The remote UE sends the RRC reconfiguration complete message to the access network device. Correspondingly, the access network device receives the RRC reconfiguration complete message sent by the remote UE.

In a possible implementation, after completing a configuration of the indirect path, the remote UE sends the RRC reconfiguration complete message to the access network device through the indirect path, in other words, sends the RRC reconfiguration complete message via the relay UE. In another implementation, after completing an RRC configuration, the remote UE sends the RRC reconfiguration complete message to the access network device through the direct path. This is used as an example in FIG. 10. The RRC reconfiguration complete message may be sent after the PC5 connection is successfully established, or may be sent after a feedback from the relay UE is received. The feedback may indicate that the relay UE has successfully performed random access or the relay UE has entered an RRC connected state.

After the indirect path is successfully configured, a PDCP entity of the remote UE may deliver a data packet to an SRAP entity on the indirect link, to implement multipath transmission. In this embodiment of this application, the remote UE may add the indirect path, and a configuration, data transmission, and the like of the direct path are not affected. For example, in a manner of not changing the PCell, the PDCP entity of the remote UE may not perform re-establishment or data recovery, and a PC5 RLC entity of the remote UE may not perform re-establishment either. It can be learned that the access network device may indicate the remote UE to add the indirect path. In this case, the remote UE not only can add the indirect path, but also does not need to release a maintained direct path. In this way, the remote UE can simultaneously maintain the two paths. For the remote UE, adding the indirect path does not need to affect communication on a current direct path. This reduces impact, for example, a delay caused by interruption, on data transmission caused by a key change or a PCell change, and also reduces resource overheads.

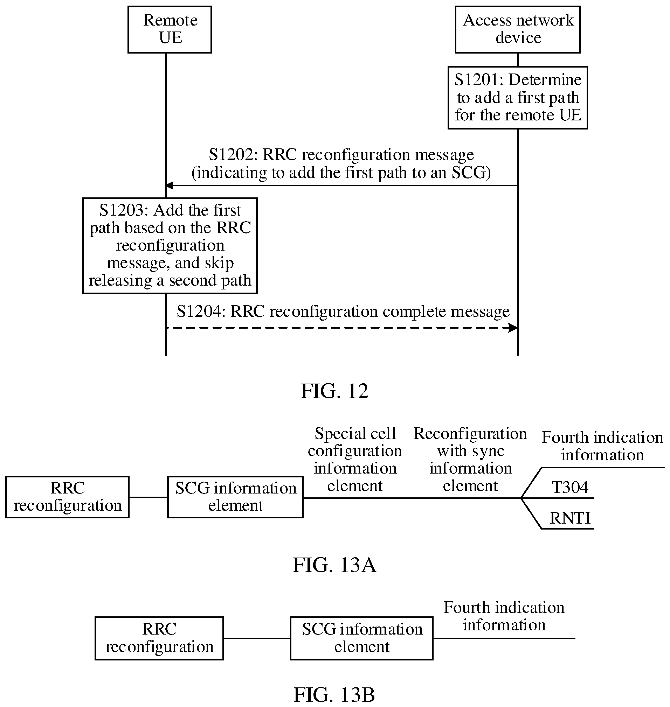

FIG. 12 is a flowchart of a fourth communication method according to an embodiment of this application. The method may also be used to add a direct path or an indirect path.

S1201: An access network device determines to add a first path for a remote UE. The remote UE is connected to a network through a second path; or it is understood as that the remote UE has maintained a second path.

The first path is the direct path for connecting the remote UE and a first cell, and the second path is the indirect path for connecting the remote UE and a second cell via a relay UE; or the first path is the indirect path for connecting the remote UE and a second cell via a relay UE, and the second path is the direct path for connecting the remote UE and a first cell. The first cell is, for example, a cell provided by the access network device, or a cell provided by another access network device. The second cell is, for example, a cell provided by the access network device, or a cell provided by another access network device.

S1202: The access network device sends an RRC reconfiguration message to the remote UE. Correspondingly, the remote UE receives the RRC reconfiguration message from the access network device. The RRC reconfiguration message may indicate to add the first path to a new cell group. For example, the RRC reconfiguration message may indicate to add the first path to an SCG; or the RRC reconfiguration message may indicate to add the first path to an SCG when the added first path is the direct path, or add the first path to a relay cell group (Relay Cell Group, RCG) when the added first path is the indirect path. For example, the RCG may be used to add the indirect path. For example, all indirect paths of the remote UE may be added to the RCG.

Optionally, in this embodiment of this application, regardless of whether the direct path or the indirect path is added, the path may be added by adding the SCG. In other words, the SCG may be added for the remote UE, and a cell of a to-be-added first path is used as a cell in the SCG.

Since the SCG needs to be added, the RRC reconfiguration message may include an SCG information element, and the SCG information element is used to configure a newly added SCG. For example, the SCG information element includes fourth indication information, and the fourth indication information may indicate to add the first path. Because the fourth indication information is included in the SCG information element, it may be understood as that the RRC reconfiguration message indicates to add the first path to the SCG.

For example, if the first path needs to be added to a PSCell in the SCG, the SCG information element includes a special cell configuration information element, for example, an SpCellConfig information element. The special cell configuration information element may include the fourth indication information. Optionally, the fourth indication information may include configuration information of the first path. For example, if the first path is the direct path, the fourth indication information may include the configuration information of the direct path; or if the first path is the indirect path, the fourth indication information may include the configuration information of the indirect path. For example, the fourth indication information may be referred to as a secondary path configuration or other information. For content included in the configuration information of the first path, an application manner of corresponding information, and the like, refer to descriptions of the configuration information of the direct path or the indirect path in any one of the foregoing embodiments. The configuration information of the first path may be directly included in the special cell configuration information element, or may be included in another information element (for example, a reconfiguration with sync information element) included in the special cell configuration information element; or some information (for example, an identifier of the first cell) in the configuration information of the first path is directly included in the special cell configuration information element, and remaining information in the configuration information of the first path is included in another information element (for example, a reconfiguration with sync information element) included in the special cell configuration information element. For this, refer to FIG. 13A. In FIG. 13A, an example in which the fourth indication information is included in the reconfiguration with sync information element is used.

Alternatively, if the first path is the indirect path, the fourth indication information may be directly included in the SCG information element. For example, the fourth indication information includes the configuration information of the indirect path. For example, the fourth indication information may be referred to as a secondary path configuration or other information. That the fourth indication information is directly included in the SCG information element may be understood as that the fourth indication information is included in the SCG information element, and is not included in another information element included in the SCG information element. For this, refer to FIG. 13B.

Alternatively, when the added first path is the indirect path, the third indication information or the fourth indication information may be added to the RCG. In this case, the SCG may be replaced with the RCG.

S1203: The remote UE adds the first path based on the RRC reconfiguration message, and does not release the second path.

S1204: The remote UE sends an RRC reconfiguration complete message to the access network device. Correspondingly, the access network device receives the RRC reconfiguration complete message sent by the remote UE.

For example, after completing a configuration based on the RRC reconfiguration message, the remote UE may send the RRC reconfiguration complete message through the second path.

In this embodiment of this application, the remote UE may add the indirect path or the direct path, and a configuration, data transmission, and the like of an original path are not affected. It can be learned that the remote UE not only can add a new path, but also does not need to release a maintained original path. In this way, the remote UE can simultaneously maintain the two paths. For the remote UE, because the original path does not need to be released, a resource can be fully used. In addition, the remote UE may simultaneously maintain the two paths, to improve transmission stability and reliability. In addition, considering that in a process of adding a path, impact on transmission of an original path may be caused, in this embodiment of this application, the impact on the original path may be reduced or avoided by using an indication. For example, when being indicated to switch to the direct path, the remote UE may further be indicated not to release the indirect path. In this case, the remote UE not only can add the direct path, but also does not need to release the maintained indirect path or change a configuration of the maintained path. In this way, the remote UE can simultaneously maintain the two paths. For the remote UE, because the indirect path does not need to be released, the transmission reliability and stability can be improved through the two paths, a change to the configuration of the maintained path is avoided or reduced, a delay caused by the configuration change to the maintained path is reduced, and user experience is improved. In this embodiment of this application, the new path is added based on a configuration of the SCG or the RCG, so that the remote UE can effectively distinguish between the paths, to facilitate the configuration. The fourth indication information is added, so that the remote UE can reduce unnecessary reconfiguration processes, to reduce impact on data transmission.

Based on descriptions of the foregoing embodiments, if the direct path needs to be added, the method provided in the embodiment shown in any one of FIG. 6, FIG. 8, or FIG. 12 may be used. If the indirect path needs to be added, the method provided in the embodiment shown in either FIG. 10 or FIG. 12 may be used.

Alternatively, if the direct path needs to be added, and the first cell and the second cell are a same cell, the method provided in the embodiment shown in FIG. 6 may be used. If the direct path needs to be added, and the first cell and the second cell are different cells, the method provided in the embodiment shown in FIG. 12 may be used. Alternatively, if the indirect path needs to be added, and the first cell and the second cell are a same cell, the method provided in the embodiment shown in FIG. 10 may be used. If the indirect path needs to be added, and the first cell and the second cell are different cells, the method provided in the embodiment shown in FIG. 12 may be used. It is equivalent to adding a path with different logic based on different relationships between the first cell and the second cell. This can effectively help the remote UE identify the PCell, to facilitate the configuration.

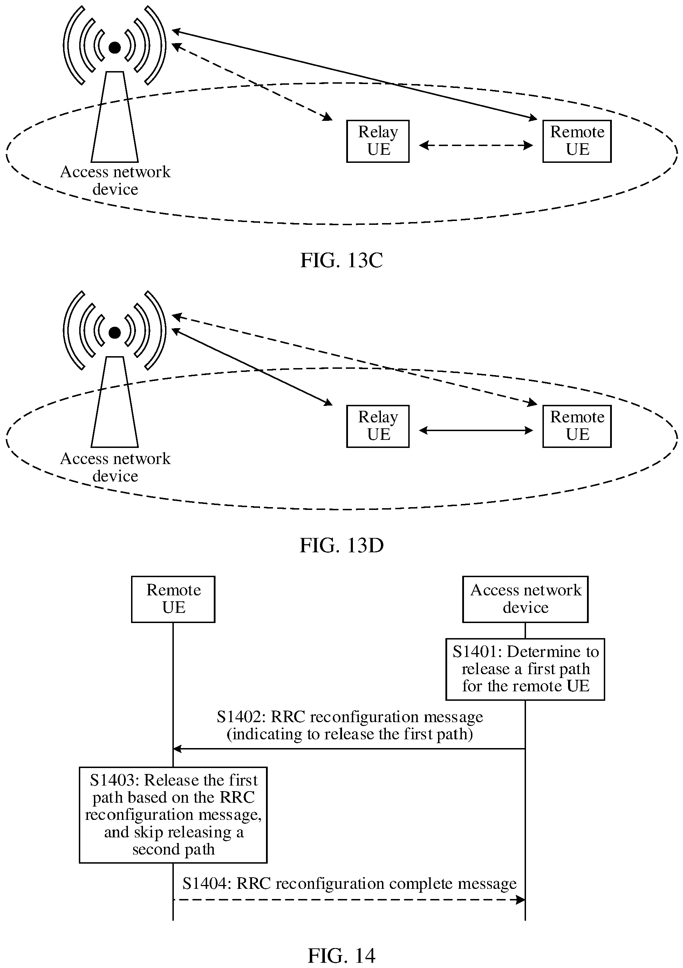

For example, the remote UE originally maintains the direct path for communicating with the first cell. Based on the method provided in the embodiment shown in either FIG. 10 or FIG. 12, the indirect path for communicating with the second cell via the relay UE may be added for the remote UE. For this, refer to FIG. 13C. The indirect path is shown by using a dashed line (straight line) in FIG. 13C. It can be learned from FIG. 13C that, after the indirect path is added, the remote UE may maintain the two paths.

For another example, the remote UE originally maintains the direct path for communicating with the second cell via the relay UE. Based on the method provided in the embodiment shown in any one of FIG. 6, FIG. 8, or FIG. 12, the direct path for communicating with the first cell may be added for the remote UE. For this, refer to FIG. 13D. The direct path is shown by using a dashed line (straight line) in FIG. 13D. It can be learned from FIG. 13D that, after the direct path is added, the remote UE may maintain the two paths. In both FIG. 13C and FIG. 13D, an example in which both the first cell and the second cell are cells provided by a same access network device is used. During actual application, this is not limited thereto.

The foregoing embodiments describe the methods for adding the direct path or the indirect path for the remote UE. After a path is added, the path may further be released. Therefore, an embodiment of this application provides a fifth communication method. In the method, how to release a direct path or an indirect path is described. FIG. 14 is a flowchart of the method.

S1401: An access network device determines to release a first path for a remote UE. The remote UE is connected to a network through a second path, and the remote UE is further connected to the network through the first path. Alternatively, it is understood as that the remote UE has maintained a second path and the first path.

The first path is a direct path for connecting the remote UE and a first cell, and the second path is an indirect path for connecting the remote UE and a second cell via a relay UE; or the first path is an indirect path for connecting the remote UE and a second cell via a relay UE, and the second path is a direct path for connecting the remote UE and a first cell. The first cell is, for example, a cell provided by the access network device, or a cell provided by another access network device. The second cell is, for example, a cell provided by the access network device, or a cell provided by another access network device.

S1402: The access network device sends an RRC reconfiguration message to the remote UE. Correspondingly, the remote UE receives the RRC reconfiguration message from the access network device. The RRC reconfiguration message may indicate to release the first path. For example, the RRC reconfiguration message includes fifth indication information, and the fifth indication information may indicate to release the first path.

The direct path and the indirect path may be released in different manners. The following separately describes the manners.
1. In a first release manner, the first path is the direct path, and the second path is the indirect path. In other words, in the first release manner, the RRC reconfiguration message indicates to release the direct path.

Because the remote UE currently maintains the direct path and the indirect path, the direct path may be released by using a process of switching from a path (pathswitch) to the indirect path. In other words, the RRC reconfiguration message may include a reconfiguration with sync information element, and the reconfiguration with sync information element may include a sidelink path switch configuration information element, for example, an sl-pathswitchConfig information element. In a normal procedure of pathswitch to the indirect path, after receiving the RRC reconfiguration message including the sl-pathswitchConfig information element, the remote UE needs to change, to a default configuration, a configuration of an SRB 1 corresponding to the indirect path of the remote UE. However, a configuration of an SRB 1 corresponding to the indirect path of the relay UE does not change. In this case, the configuration of the SRB 1 of the remote UE may be different from the configuration of the SRB 1 of the relay UE. Therefore, the relay UE also needs to reconfigure the SRB 1 corresponding to the indirect path. This causes a waste of network resources, and also increases a communication delay.

Therefore, in this embodiment of this application, the fifth indication information is added to the RRC reconfiguration message. The fifth indication information may indicate to release the first path. The remote UE can determine, based on the fifth indication information, not to release the indirect path, or can determine that the indirect path does not need to be reestablished, or can determine that the indirect path does not need to be reconfigured (for example, the SRB 1 corresponding to the indirect path is not reconfigured), and continues to use an existing configuration of the indirect path. In this case, the relay UE does not need to reconfigure the indirect path either. Therefore, the waste of the network resources is reduced, and the communication delay is also reduced.

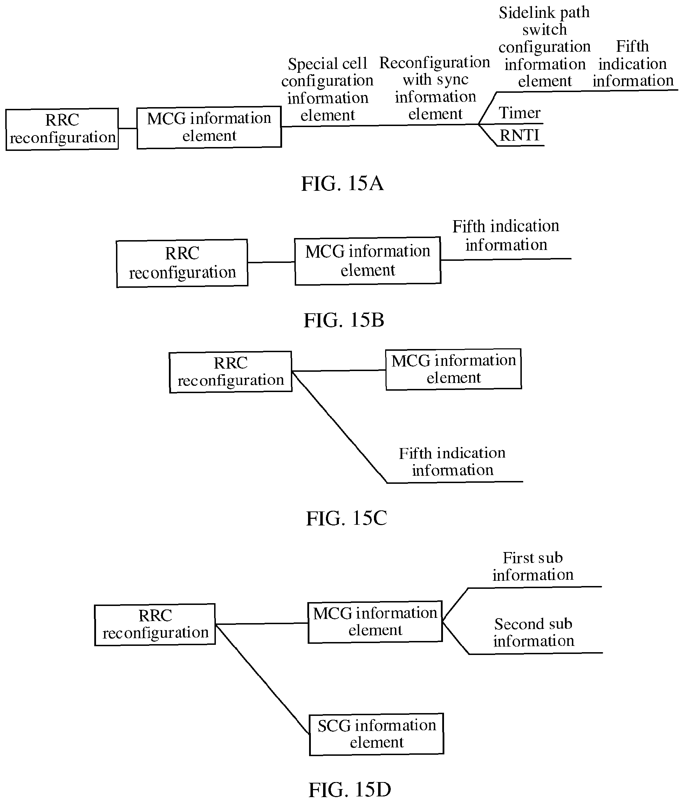

Optionally, the RRC reconfiguration message may include an MCG information element, and the fifth indication information may be included in the MCG information element. For example, in a manner in which the MCG information element includes the fifth indication information, the MCG information element includes a special cell configuration information element, the special cell configuration information element includes the reconfiguration with sync information element, the reconfiguration with sync information element includes a sidelink path switch information element, and the sidelink path switch information element may include the fifth indication information. Optionally, the reconfiguration with sync information element may further include other information, for example, configuration information of the indirect path, for example, a corresponding timer and an RNTI. For this, refer to FIG. 15A. When the MCG information element of the RRC reconfiguration message received by the remote UE includes the reconfiguration with sync information element, the sidelink path switch configuration information element, and the fifth indication information, the remote UE may keep a current indirect path configuration. In other words, the remote UE does not need to change a configuration of the relay UE corresponding to the indirect link, for example, does not need to change an SL-RLC1 configuration to a default configuration. Alternatively, when the MCG information element of the RRC reconfiguration message received by the remote UE includes the reconfiguration with sync information element, includes the sidelink path switch configuration information element, and does not include the fifth indication information, the remote UE considers that a relay UE corresponding to an identifier of the relay UE indicated by the sidelink path switch configuration information element is the relay UE corresponding to the indirect path, and the remote UE may start a timer T420. If the remote UE does not establish a connection to the relay UE, the remote UE needs to establish a PC5 connection to the relay UE, and may change an SL-RLC1 configuration (a configuration used to transmit the SRB 1 of the remote UE) to a default configuration.

If the first cell is a PCell in an MCG of the remote UE, and the first cell and the second cell are different cells, the second cell may be further changed to the PCell in the MCG of the remote UE. For example, in a change manner, the special cell configuration information element of the MCG information element of the RRC reconfiguration message includes the configuration information of the indirect path. This is equivalent to moving the configuration information that is of the indirect path and that is included in a secondary cell configuration information element of the MCG information element of the RRC reconfiguration message to the special cell configuration information element. However, the configuration information that is of the indirect link and that is included in the secondary cell configuration information element may still exist. Therefore, the remote UE may release the configuration information that is of the indirect path and that is included in the secondary cell configuration information element of the MCG information element of the RRC reconfiguration message. For example, the access network device may send indication information, for example, referred to as indication information A, to the remote UE. The indication information A may be included in the RRC reconfiguration message, or may be separately sent. The indication information A may indicate to release the configuration information that is of the indirect path and that is included in the secondary cell configuration information element of the MCG information element of the RRC reconfiguration message. Alternatively, after receiving the RRC reconfiguration message, if the remote UE determines that the RRC reconfiguration message includes the sidelink path switch configuration information element, the remote UE may release the configuration information that is of the indirect path and that is included in the secondary cell configuration information element of the MCG information element of the RRC reconfiguration message. The access network device does not need to provide an additional indication.

Optionally, when the direct path is released, the fifth indication information may specifically indicate not to release the indirect path, or indicate to keep the indirect path, or indicate not to release the configuration information of the indirect path, or indicate to keep the configuration information of the indirect path. This is equivalent to indicating to keep the indirect path to indirectly indicate to release the direct path. For example, the fifth indication information may indicate that the indirect path is kept, or may be other information.

Optionally, the RRC reconfiguration message may further include sixth indication information, and the sixth indication information may indicate PDCP entity re-establishment or data recovery, so that the remote UE can perform PDCP entity re-establishment or data recovery based on the sixth indication information. Therefore, for a DRB in an acknowledged mode (acknowledged mode, AM), the remote UE may perform data retransmission on an unsuccessfully transmitted data packet on the released direct path, for example, may perform data retransmission through the unreleased indirect path.

For example, for any embodiment in FIG. 6, FIG. 8, or FIG. 12, the direct path may be released in the first release manner. If the direct path is added by using the embodiment shown in FIG. 12, after the direct path is released, an SCG (for example, the SCG including the indirect path) or an RCG of the remote UE may be automatically changed to the MCG of the remote UE.

2. In a second release manner, the first path is the direct path, and the second path is the indirect path. In other words, in the second release manner, the RRC reconfiguration message indicates to release the direct path. For example, if the direct path is added by using the embodiment shown in FIG. 12, the first cell is a PCell in an MCG of the remote UE, the first cell and the second cell are different cells, and the second cell is a PSCell in an SCG of the remote UE, the direct path may be released in this manner.

In the second release manner, the RRC reconfiguration message may indicate to release the direct path in a manner of indicating to release the MCG. For example, the fifth indication information may indicate to release the MCG. For example, the RRC reconfiguration message includes an MCG information element, and the MCG information element may include the fifth indication information. The fifth indication information may indicate to release the MCG corresponding to the MCG information element. For this, refer to FIG. 15B. For another example, the fifth indication information may be directly included in the RRC reconfiguration message, and does not need to be included in another information element of the RRC reconfiguration message. For this, refer to FIG. 15C. For example, the fifth indication information is release (release) information or other information. The remote UE may release the MCG based on the fifth indication information. This is equivalent to releasing the direct path. Because the MCG has been released, the SCG (for example, the SCG including the indirect path) of the remote UE may be automatically changed to the MCG. If an SRB 0/SRB 1/SRB 2 of the remote UE is not connected to the access network device via the relay UE, the remote UE may automatically associate a PDCP entity corresponding to the SRB 1/SRB 2 with an SRAP entity corresponding to the relay UE.

A process of releasing the direct path in the manner of releasing the MCG is simple, and the RRC reconfiguration message includes a small amount of content, to help reduce transmission overheads.

3. In a third release manner, the first path is the direct path, and the second path is the indirect path. In other words, in the third release manner, the RRC reconfiguration message indicates to release the direct path. For example, the embodiment shown in any one of FIG. 6, FIG. 8, or FIG. 12 is applicable to the third release manner provided that an SCG appears.

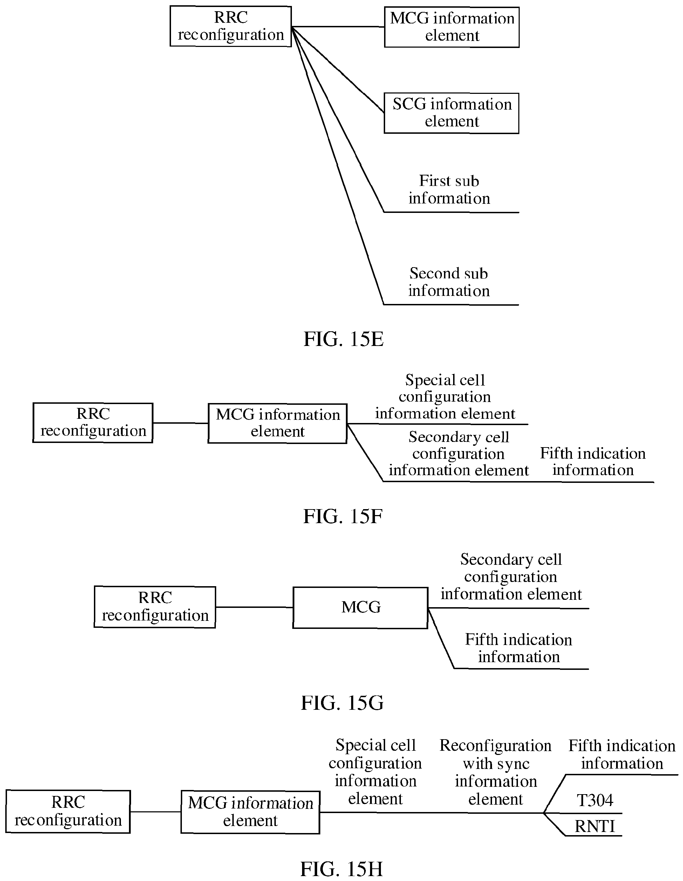

In the third release manner, the RRC reconfiguration message may indicate to release the direct path in a manner of indicating to release the SCG. However, a cell corresponding to the direct path is included in an MCG. Therefore, roles of the MCG and the SCG may be exchanged first, and then the SCG whose role is exchanged is released. In this way, the direct path is released. For example, the fifth indication information may include first sub information and second sub information. The first sub information may indicate to change, to the SCG, the MCG in which the cell corresponding to the direct path is located, and/or the first sub information indicates to change, to the MCG, the SCG in which a cell corresponding to the indirect path is located. For example, the SCG obtained by changing an original MCG is referred to as a new MCG, and the MCG obtained by changing an original SCG is referred to as a new SCG. The second sub information may indicate to release the new SCG. Optionally, the RRC reconfiguration message may include an MCG information element, and the MCG information element may include the first sub information and the second sub information. For this, refer to FIG. 15D. Alternatively, the first sub information and the second sub information may be directly included in the RRC reconfiguration message, and do not need to be included in another information element of the RRC reconfiguration message. For this, refer to FIG. 15E. For example, the MCG information element includes a release list (releaselist), and the release list may include an identifier of a to-be-released SCG. The second sub information is, for example, included in the release list. For example, the second sub information includes an identifier of the new SCG.

The remote UE may exchange the roles of the MCG and the SCG based on the first sub information, and then may release the new SCG based on the second sub information, which is equivalent to releasing the direct path.

In the third release manner, a process of releasing the direct path in the manner of releasing the SCG is simple, and the RRC reconfiguration message includes a small amount of content, to help reduce transmission overheads. In addition, the roles of the MCG and SCG are exchanged first, and then the new SCG is released, so that the MCG is not missing.

4. In a fourth release manner, the first path is the direct path, and the second path is the indirect path. In other words, in the fourth release manner, the RRC reconfiguration message indicates to release the direct path. For example, if the first cell is an SCell in an MCG of the remote UE, the direct path may be released in the fourth release manner.

Because the remote UE currently maintains the direct path and the indirect path, the direct path may be released by using a process of switching from a path (pathswitch) to the indirect path. In other words, the RRC reconfiguration message may include a reconfiguration with sync information element, and the reconfiguration with sync information element may include a sidelink path switch configuration information element, for example, an sl-pathswitchConfig information element. In a normal procedure of pathswitch to the indirect path, after receiving the RRC reconfiguration message including the sl-pathswitchConfig information element, the remote UE needs to change, to a default configuration, a configuration of an SRB 1 corresponding to the indirect path of the remote UE. However, a configuration of an SRB 1 corresponding to the indirect path of the relay UE does not change. In this case, the configuration of the SRB 1 of the remote UE may be different from the configuration of the SRB 1 of the relay UE. Therefore, the relay UE also needs to reconfigure the SRB 1 corresponding to the indirect path. This causes a waste of network resources, and also increases a communication delay.

Therefore, the direct path may be released by using a process of switching to the direct path. In a normal procedure of switching to the direct path, after receiving the RRC reconfiguration message, the remote UE needs to re-initiate, based on a random access parameter indicated by the RRC reconfiguration message, random access to a cell (for example, the first cell) corresponding to the direct path. This causes the waste of the network resources, and also increases the communication delay. Therefore, in this embodiment of this application, the fifth indication information is added to the RRC reconfiguration message. The remote UE can determine, based on the fifth indication information, not to release the direct path, or can determine that the random access does not need to be re-initiated to the cell corresponding to the direct path. Therefore, the waste of the network resources is reduced, and the communication delay is also reduced.

The first cell is the SCell in the MCG of the remote UE. In addition to a cell connected to the direct path (the first path) to be released by the remote UE, the first cell may alternatively be a cell connected to another path of the remote UE. For example, the remote UE may be indirectly connected to the first cell via the relay UE. In this case, if the remote UE is connected to the first cell only through the to-be-released direct path, the fifth indication information may indicate to release the first cell; or if the remote UE is connected to the first cell through a to-be-released direct path, and is further connected to the first cell through another path, the fifth indication information may indicate to release the direct path, but does not indicate to release the first cell.

The RRC reconfiguration message may include an MCG information element, and the fifth indication information may be included in the MCG information element. Optionally, for example, in a manner in which the MCG information element includes the fifth indication information, the MCG information element includes a secondary cell configuration information element, and the secondary cell configuration information element includes the fifth indication information. For this, refer to FIG. 15F. In this case, the fifth indication information may indicate to release the direct path. For example, the fifth indication information includes direct release (directrelease) information. Alternatively, the fifth indication information may indicate to release the first cell. For example, the fifth indication information includes release information. For example, the fifth indication information includes the direct release information, to indicate to release the direct path. Optionally, the fifth indication information may further include other information about the direct path.

Alternatively, if the fifth indication information may indicate to release the first cell, for example, in a manner in which the MCG information element includes the fifth indication information, the MCG information element directly includes the fifth indication information. In other words, the fifth indication information is not included in another information element included in the MCG information element. For this, still refer to FIG. 15G. For example, a special cell configuration information element includes a release list, and the release list includes an identifier of a to-be-released SCell in the MCG. The fifth indication information is included in the release list. For example, the fifth indication information includes an identifier of the first cell, to indicate to release the first cell.

5. In a fifth release manner, the first path is the indirect path, and the second path is the direct path. In other words, in the fifth release manner, the RRC reconfiguration message indicates to release the indirect path. For example, the embodiment shown in any one of FIG. 6, FIG. 8, or FIG. 12 is applicable to the fifth release manner.

Because the remote UE currently maintains the direct path and the indirect path, the indirect path may be released by using a process of switching to the direct path. In a normal procedure of switching to the direct path, after receiving the RRC reconfiguration message, the remote UE needs to re-initiate, based on a random access parameter indicated by the RRC reconfiguration message, random access to a cell (for example, the first cell) corresponding to the direct path. Because the remote UE is currently fairly connected to the cell corresponding to the direct path, re-performing random access may cause a waste of network resources, and also increase a communication delay. Therefore, in this embodiment of this application, the fifth indication information is added to the RRC reconfiguration message. The fifth indication information may indicate to release the indirect path. The remote UE can determine, based on the fifth indication information, not to release the direct path, or can determine that the random access does not need to be re-initiated to the cell corresponding to the direct path. Therefore, the waste of the network resources is reduced, and the communication delay is also reduced.

Optionally, the RRC reconfiguration message may include an MCG information element, and the fifth indication information may be included in the MCG information element. For example, in a manner in which the MCG information element includes the fifth indication information, the MCG information element includes a special cell configuration information element, the special cell configuration information element includes a reconfiguration with sync information element, and the reconfiguration with sync information element includes the fifth indication information. Optionally, the reconfiguration with sync information element may further include other information, for example, configuration information of the indirect path, for example, a timer T304 and an RNTI. For this, refer to FIG. 15H. When the MCG information element of the RRC reconfiguration message received by the remote UE includes the special cell configuration information element, and the special cell configuration information element includes the reconfiguration with sync information element and includes the fifth indication information, the remote UE does not need to start T304, and does not need to perform random access to a cell indicated by the RRC reconfiguration message; or when the MCG information element of the RRC reconfiguration message received by the remote UE includes the special cell configuration information element, and the special cell configuration information element includes the reconfiguration with sync information element and does not include the fifth indication information, the remote UE needs to switch a PCell to a cell indicated by the RRC reconfiguration message, and in this case, the remote UE may start T304 to perform random access to the cell indicated by the RRC reconfiguration message.

For example, the fifth indication information includes indirect release (indirectrelease) information, to indicate to release the indirect path. Optionally, the fifth indication information may further include other information about the indirect path, for example, include an identifier (for example, a layer 2 ID of the relay UE) of the relay UE corresponding to the indirect path, or include an identifier (for example, a local identifier (local ID) of the remote UE) of the remote UE corresponding to the indirect path. If the remote UE maintains a plurality of indirect paths, and the fifth indication information indicates to release some of the indirect paths, the fifth indication information may indicate, by including the identifier of the relay UE and/or the identifier of the remote UE, to release which indirect paths.

Optionally, the RRC reconfiguration message may further include sixth indication information, and the sixth indication information may indicate PDCP entity re-establishment or data recovery, so that the remote UE can perform PDCP entity re-establishment or data recovery based on the sixth indication information. Therefore, for a DRB in an AM, the remote UE may perform data retransmission on an unsuccessfully transmitted data packet on the released indirect path, for example, may perform data retransmission through the unreleased direct path.

6. In a sixth release manner, the first path is the indirect path, and the second path is the direct path. In other words, in the sixth release manner, the RRC reconfiguration message indicates to release the indirect path. For example, the embodiment shown in any one of FIG. 6, FIG. 8, or FIG. 12 is applicable to the sixth release manner.

Because the remote UE currently maintains the direct path and the indirect path, the direct path may be released by using a process of switching to the direct path. In a normal procedure of switching to the direct path, after receiving the RRC reconfiguration message, the remote UE needs to re-initiate, based on a random access parameter indicated by the RRC reconfiguration message, random access to a cell (for example, the first cell) corresponding to the direct path. This causes a waste of network resources, and also increases a communication delay. Therefore, in this embodiment of this application, the fifth indication information is added to the RRC reconfiguration message. The remote UE can determine, based on the fifth indication information, not to release the direct path, or can determine that the random access does not need to be re-initiated to the cell corresponding to the direct path. Therefore, the waste of the network resources is reduced, and the communication delay is also reduced.

The second cell is an SCell in an MCG of the remote UE. In addition to a cell connected to the indirect path (the first path) to be released by the remote UE, the second cell may alternatively be a cell connected to another path of the remote UE. For example, the remote UE may be directly connected to the second cell through a Uu interface. In this case, if the remote UE is connected to the second cell only through the to-be-released indirect path, the fifth indication information may indicate to release the second cell; or if the remote UE is connected to the second cell through the to-be-released indirect path, and is further connected to the second cell through another path, the fifth indication information may indicate to release the indirect path, but does not indicate to release the second cell.

The RRC reconfiguration message may include an MCG information element, and the fifth indication information may be included in the MCG information element. Optionally, for example, in a manner in which the MCG information element includes the fifth indication information, the MCG information element includes a secondary cell configuration information element, and the secondary cell configuration information element includes the fifth indication information. For this, refer to FIG. 15F. For example, the fifth indication information may indicate to release the indirect path. For example, the fifth indication information includes indirect release information. Alternatively, the fifth indication information may indicate to release the second cell. For example, the fifth indication information includes release (release) information. For example, the fifth indication information includes the indirect release information, to indicate to release the indirect path. Optionally, the fifth indication information may further include other information about the indirect path, for example, include an identifier (for example, a layer 2 ID of the relay UE) of the relay UE corresponding to the indirect path, or include an identifier (for example, a local identifier (local ID) of the remote UE) of the remote UE corresponding to the indirect path.

Alternatively, if the fifth indication information may indicate to release the second cell, for example, in a manner in which the MCG information element includes the fifth indication information, the MCG information element includes a special cell configuration information element, and the special cell configuration information element includes the fifth indication information. For this, refer to FIG. 15G. For example, the special cell configuration information element includes a release list, and the release list includes an identifier of a to-be-released SCell in the MCG. The fifth indication information is included in the release list. For example, the fifth indication information includes an identifier of the second cell, to indicate to release the second cell.

Optionally, the RRC reconfiguration message may further include sixth indication information, and the sixth indication information may indicate PDCP entity re-establishment or data recovery, so that the remote UE can perform PDCP entity re-establishment or data recovery based on the sixth indication information. Therefore, for a DRB in an AM, the remote UE may perform data retransmission on an unsuccessfully transmitted data packet on the released indirect path, for example, may perform data retransmission through the unreleased direct path.

7. In a seventh release manner, the first path is the indirect path, and the second path is the direct path. In other words, in the seventh release manner, the RRC reconfiguration message indicates to release the indirect path. For example, if the indirect path is added by using the embodiment shown in FIG. 10, the second cell is a PCell in an MCG of the remote UE, and the first cell and the second cell are different cells, for example, the first cell is an SCell in the MCG of the remote UE, the indirect path may be released in the seventh release manner. For another example, if the indirect path is added by using the embodiment shown in FIG. 12, the second cell is a PCell in an MCG of the remote UE, and the first cell and the second cell are different cells, for example, the first cell is a PSCell in an SCG of the remote UE, the indirect path may be released in the seventh release manner.

Because the first cell is different from the second cell, the indirect path may be released by using a process of switching to the first cell. For example, the RRC reconfiguration message includes an MCG information element, and the MCG information element includes a special cell configuration information element. A reconfiguration with sync information element is added to the special cell configuration information element, to indicate to switch to the first cell. For example, the special cell configuration information element may include configuration information of the direct path. This is equivalent to changing, to the PCell, the first cell corresponding to the direct path. In addition, the MCG information element further includes a secondary cell configuration information element, and the secondary cell configuration information element may include configuration information of a to-be-released indirect path, which is equivalent to changing, to the SCell, the second cell corresponding to the indirect path; or the RRC reconfiguration message further includes an SCG information element, an SCG corresponding to the SCG information element is originally the SCG in which the first cell is located, and the SCG information element may include configuration information of a to-be-released indirect path. For example, the configuration information of the indirect link is included in the special cell configuration information element of the SCG information element, which is equivalent to changing the second cell to the PSCell in the SCG.

However, it can be learned from the foregoing descriptions that a cell handover process may cause the remote UE to initiate random access to the first cell. Therefore, in this embodiment of this application, the fifth indication information is added to the RRC reconfiguration message. The remote UE can determine, based on the fifth indication information, not to initiate the random access to the first cell. Optionally, the fifth indication information is included in the special cell configuration information element of the MCG information element. For example, the special cell configuration information element includes the reconfiguration with sync information element, and the reconfiguration with sync information element may include the fifth indication information. For this, still refer to FIG. 15A. The fifth indication information may indicate to release the indirect path, or indicate to change the first cell to the PCell, or indicate to change the second cell to the SCell, or indicate to release the SCG.

Optionally, the RRC reconfiguration message may further include sixth indication information, and the sixth indication information may indicate PDCP entity re-establishment or data recovery, so that the remote UE can perform PDCP entity re-establishment or data recovery based on the sixth indication information. Therefore, for a DRB in an AM, the remote UE may perform data retransmission on an unsuccessfully transmitted data packet on the released indirect path, for example, may perform data retransmission through an unreleased direct path.

8. In an eighth release manner, the first path is the direct path, and the second path is the indirect path. In other words, in the eighth release manner, the RRC reconfiguration message indicates to release the direct path. For example, if the indirect path is added by using the embodiment shown in FIG. 12, the second cell corresponding to the indirect path is a PCell in an MCG of the remote UE, and the first cell and the second cell are different cells, the direct path may be released in the eighth release manner.

In the eighth release manner, the RRC reconfiguration message may indicate to release the indirect path in a manner of indicating to release the MCG. For example, the fifth indication information may indicate to release the MCG. For example, the RRC reconfiguration message includes an MCG information element, and the MCG information element may include the fifth indication information. The fifth indication information may indicate to release the MCG corresponding to the MCG information element. For this, still refer to FIG. 15B or FIG. 15C. For example, the fifth indication information includes release information, or includes other information. The remote UE may release the MCG based on the fifth indication information. This is equivalent to releasing the direct path. Because the MCG has been released, an SCG (for example, the SCG including the direct path) of the remote UE may be automatically changed to the MCG.

A process of releasing the indirect path in the manner of releasing the MCG is simple, and the RRC reconfiguration message includes a small amount of content, to help reduce transmission overheads.

9. In a ninth release manner, the first path is the direct path, and the second path is the indirect path. In other words, in the ninth release manner, the RRC reconfiguration message indicates to release the direct path. For example, if the direct path is added by using the embodiment shown in FIG. 12, the first cell is a PCell in an MCG of the remote UE, and the first cell and the second cell are different cells, the indirect path may be released in the ninth manner.

In the ninth release manner, the RRC reconfiguration message may indicate to release the indirect path in a manner of indicating to release an SCG. However, a cell corresponding to the indirect path is included in the MCG. Therefore, roles of the MCG and the SCG may be exchanged first, and then the SCG whose role is exchanged is released. In this way, the indirect path is released. For example, the fifth indication information may include first sub information and second sub information. The first sub information may indicate to change, to the SCG, the MCG in which the cell corresponding to the indirect path is located, and/or the first sub information indicates to change, to the MCG, the SCG in which a cell corresponding to the direct path is located. For example, the SCG obtained by changing an original MCG is referred to as a new MCG, and the MCG obtained by changing an original SCG is referred to as a new SCG. The second sub information may indicate to release the new SCG. Optionally, the RRC reconfiguration message may include an MCG information element, and the MCG information element may include the first sub information and the second sub information. For this, refer to FIG. 15D or FIG. 15E. For example, the MCG information element includes a release list, and the release list may include an identifier of a to-be-released SCG. The second sub information is, for example, included in the release list. For example, the second sub information includes an identifier of the new SCG.

The remote UE may exchange the roles of the MCG and the SCG based on the first sub information, and then may release the new SCG based on the second sub information, which is equivalent to releasing the indirect path.

In the ninth release manner, a process of releasing the indirect path in the manner of releasing the SCG is simple, and the RRC reconfiguration message includes a small amount of content, to help reduce transmission overheads. In addition, the roles of the MCG and SCG are exchanged first, and then the new SCG is released, so that the MCG is not missing.

S1403: The remote UE releases the first path based on the RRC reconfiguration message, and does not release the second path.

The RRC reconfiguration message may perform an indication in one of the release manners described in S1402. The remote UE releases the first path based on the RRC reconfiguration message, and continues to keep the second path.

S1404: The remote UE sends an RRC reconfiguration complete message to the access network device. Correspondingly, the access network device receives the RRC reconfiguration complete message sent by the remote UE.

For example, after releasing the first path based on the RRC reconfiguration message, the remote UE may send the RRC reconfiguration complete message through the second path.

In technical solutions provided in this embodiment of this application, the direct path or the indirect path may be released, and communication on one path is not affected when the other path is released, to reduce a process of reconfiguring or establishing one path when the remote UE releases the other path, and reduce a communication delay.

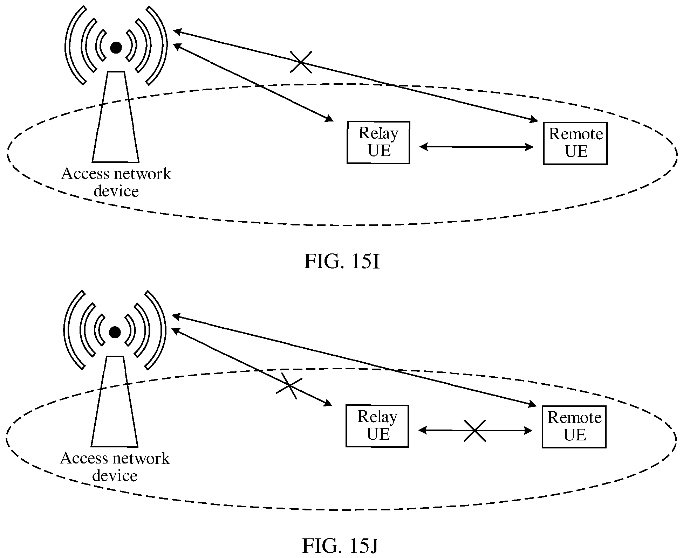

For example, the remote UE originally maintains the direct path for communicating with the first cell, and maintains the indirect path for communicating with the second cell via the relay UE. In the method provided in the embodiment shown in FIG. 14, the direct path may be released for the remote UE. For this, refer to FIG. 15I. It can be learned from FIG. 15I that after the direct path is released, the remote UE may continue to maintain the indirect path.

For another example, the remote UE originally maintains the direct path for communicating with the first cell, and maintains the indirect path for communicating with the second cell via the relay UE. In the method provided in the embodiment shown in FIG. 14, the indirect path may be released for the remote UE. For this, refer to FIG. 15J. It can be learned from FIG. 15J that after the indirect path is released, the remote UE may continue to maintain the direct path.

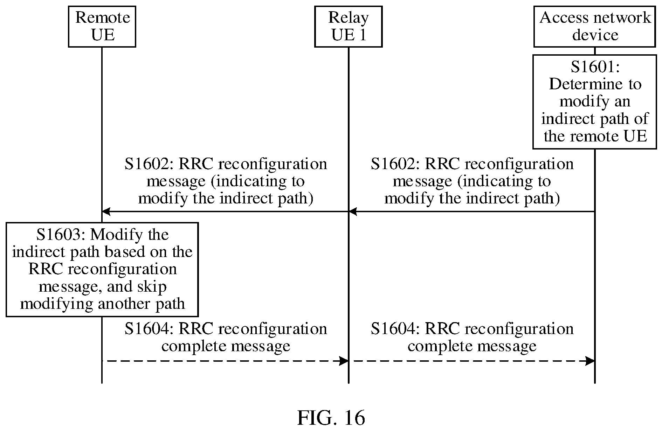

It can be learned from FIG. 4 that the RRC reconfiguration message may include a sidelink layer 2 remote configuration information element and a sidelink configuration dedicated NR information element. The sidelink layer 2 remote configuration information element includes configuration information of an SRAP entity of the remote UE, and the sidelink configuration dedicated NR information element includes configuration information of an RLC entity of the remote UE. Both the configuration information of the SRAP entity and the configuration information of the RLC entity correspond to the indirect path. If the remote UE maintains a plurality of indirect paths, when one of the indirect paths is added or released for the remote UE, the remote UE may not know which indirect path corresponds to the configuration information of the SRAP entity and the configuration information of the RLC entity of the RRC reconfiguration message. Consequently, the remote UE may fail to add or release the indirect path. Therefore, an embodiment of this application provides a sixth communication method. In the method, a remote UE can determine configuration information corresponding to an added or released indirect path. FIG. 16 is a flowchart of the method.

S1601: An access network device determines to modify an indirect path of a remote UE. The indirect path is a path for connecting the remote UE and a second cell via a relay UE. The remote UE is further connected to a first cell through another indirect path. Alternatively, it is understood as that the remote UE has maintained an indirect path. For example, the indirect path that has been maintained by the remote UE is referred to as a first indirect path, or referred to as an indirect path 1. The indirect path 1 corresponds to the first cell, and the indirect path corresponds to a relay UE 1. The indirect path to be modified by the remote UE is referred to as a second indirect path, or referred to as an indirect path 2. The indirect path 2 corresponds to the second cell, and the indirect path corresponds to a relay UE 2.

Optionally, in addition to the indirect path 1, the remote UE may have maintained another indirect path and/or another direct path. This is not limited in this embodiment of this application.

The first cell is, for example, a cell provided by the access network device, or a cell provided by another access network device. The remote UE is served by the first cell via the relay UE 1. The second cell is, for example, a cell provided by the access network device, or a cell provided by another access network device.

The modification described herein is, for example, adding or releasing. In other words, S1601 may be replaced with the following: The access network device determines to add the indirect path (for example, the indirect path 2) for the remote UE; or the access network device determines to release the indirect path (for example, the indirect path 2) for the remote UE.

S1602: The access network device sends an RRC reconfiguration message to the remote UE. Correspondingly, the remote UE receives the RRC reconfiguration message from the access network device. For example, the access network device may send the RRC reconfiguration message to the remote UE through the indirect path 1 (or via the relay UE 1). Correspondingly, the remote UE may receive the RRC reconfiguration message from the access network device through the indirect path 1 (or via the relay UE 1). This is used as an example in FIG. 16.

The RRC reconfiguration message may indicate to modify (for example, add or release) the indirect path 2 for connecting the remote UE and the second cell via the relay UE. For example, the RRC reconfiguration message includes seventh indication information, and the seventh indication information may indicate to modify the indirect path 2. Optionally, the RRC reconfiguration message may include an MCG information element, and the MCG information element includes the seventh indication information. For example, the seventh indication information includes configuration information of the to-be-modified indirect path 2, for example, includes an identifier of the relay UE.

In a manner in which the MCG information element includes the seventh indication information, the MCG information element includes a special cell configuration information element, the special cell configuration information element includes a reconfiguration with sync information element, and the reconfiguration with sync information element includes the seventh indication information. Alternatively, in another manner in which the MCG information element includes the seventh indication information, the MCG information element includes a secondary cell configuration information element, the secondary cell configuration information element includes a reconfiguration with sync information element, and the reconfiguration with sync information element includes the seventh indication information. For a manner in which the RRC reconfiguration message includes the seventh indication information, content indicated by the seventh indication information, and the like, refer to the foregoing corresponding embodiment.

In addition, the RRC reconfiguration message may further include a first association relationship and a second association relationship. The first association relationship is, for example, an association relationship between configuration information of an RLC entity of the remote UE and the identifier of the relay UE. The second association relationship is, for example, an association relationship between configuration information of an SRAP entity of the remote UE and the identifier of the relay UE. For example, the relay UE is a relay UE corresponding to a to-be-released indirect path; or the relay UE is a relay UE corresponding to an indirect path that is not released (or is kept).

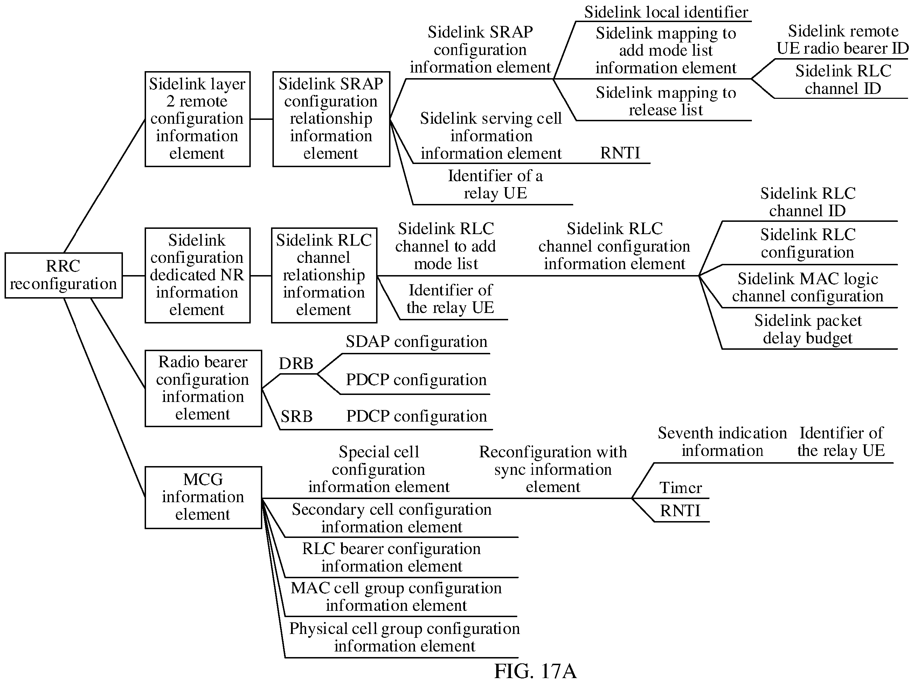

For example, the access network device adds the indirect path 2 for the remote UE by using the RRC reconfiguration message. The indirect path 2 corresponds to the second cell. The remote UE has maintained an indirect path 1. The indirect path 1 corresponds to the first cell. The first cell is, for example, a PCell in an MCG of the remote UE. The second cell and the first cell are, for example, a same cell. For an implementation of the RRC reconfiguration message, refer to FIG. 17A. In FIG. 17A, a sidelink SRAP configuration relationship (SL-SRAP-Config-relation) information element is newly added to a sidelink layer 2 remote configuration information element. The sidelink SRAP configuration relationship information element may include a sidelink SRAP configuration information element, a sidelink serving cell information element, and the like. In addition, the sidelink SRAP configuration relationship information element further includes the identifier (for example, represented as targetRelayUEIdentity) of the relay UE. For example, one or more sidelink SRAP configuration relationship information elements may be added to the sidelink layer 2 remote configuration information element, where one sidelink SRAP configuration relationship information element corresponds to one indirect path. In other words, the sidelink SRAP configuration relationship information elements may be in one-to-one correspondence with indirect paths. An identifier that is of a relay UE and that is included in a sidelink SRAP configuration relationship information element is an identifier of a relay UE on an indirect path corresponding to the sidelink SRAP configuration relationship information element. It may be understood as that one sidelink SRAP configuration relationship information element includes one second association relationship. For example, the identifier that is of the relay UE and that is included in the sidelink SRAP configuration relationship information element shown in FIG. 17A is an identifier of the relay UE 2 corresponding to the to-be-released indirect path 2.

In FIG. 17A, a sidelink RLC channel relationship (SL-RLC-Channel-relation) information element is also added to a sidelink configuration dedicated NR information element. The sidelink RLC channel relationship information element may include a sidelink RLC channel to add mode list information element, and may further include the identifier (for example, represented as targetRelayUEIdentity) of the relay UE. For example, one or more sidelink RLC channel relationship information elements may be added to the sidelink configuration dedicated NR information element, where one sidelink RLC channel relationship information element corresponds to one indirect path. In other words, the sidelink RLC channel relationship information elements may be in one-to-one correspondence with indirect paths. An identifier that is of a relay UE and that is included in a sidelink RLC channel relationship information element is an identifier of a relay UE on an indirect path corresponding to the sidelink RLC channel relationship information element. It may be understood as that one sidelink RLC channel relationship information element includes one first association relationship. For example, the identifier that is of the relay UE and that is included in the sidelink RLC channel relationship information element shown in FIG. 17A is an identifier of the relay UE 2 corresponding to the to-be-released indirect path 2.

In addition, in FIG. 17A, an example in which the seventh indication information includes the identifier of the relay UE is used. For example, the seventh indication information is a secondary path configuration. For example, the identifier that is of the relay UE and that is included in the seventh indication information in FIG. 17A is the identifier of the relay UE 2 corresponding to the to-be-released indirect path 2. It can be learned that a relationship is established between the configuration information of the SRAP entity and the configuration information of the RLC entity by using the identifier of the relay UE 2, so that the remote UE can determine the configuration information of the SRAP entity and the configuration information of the RLC entity that correspond to a currently modified indirect path 2, and/or the remote UE can determine the configuration information of the SRAP entity and the configuration information of the RLC entity that correspond to an unmodified indirect path 2.

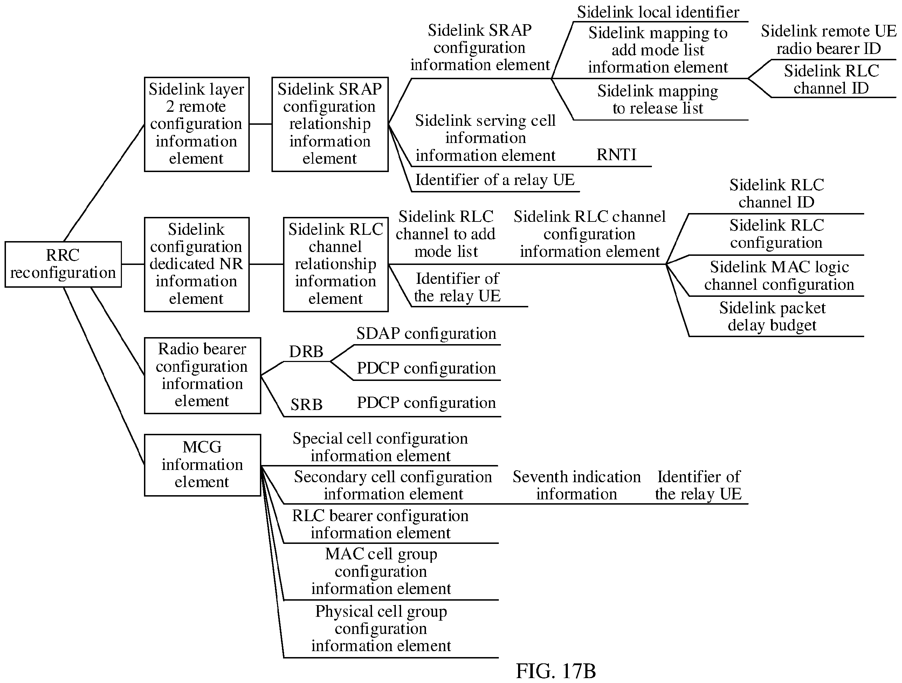

For example, the access network device adds the indirect path 2 for the remote UE by using the RRC reconfiguration message. The indirect path 2 corresponds to the second cell. The remote UE has maintained the indirect path 1. The indirect path 1 corresponds to the first cell. The first cell is, for example, a PCell in an MCG of the remote UE. The second cell and the first cell are, for example, different cells. For an implementation of the RRC reconfiguration message, refer to FIG. 17B. In FIG. 17B, the seventh indication information is, for example, a secondary path configuration. In FIG. 17B, an example in which the second cell is an SCell in the MCG of the remote UE is used. In addition, the second cell may alternatively be a PSCell in an SCG of the remote UE. For example, the identifier of the relay UE shown in FIG. 17B is the identifier of the relay UE 2 corresponding to the to-be-released indirect path 2.

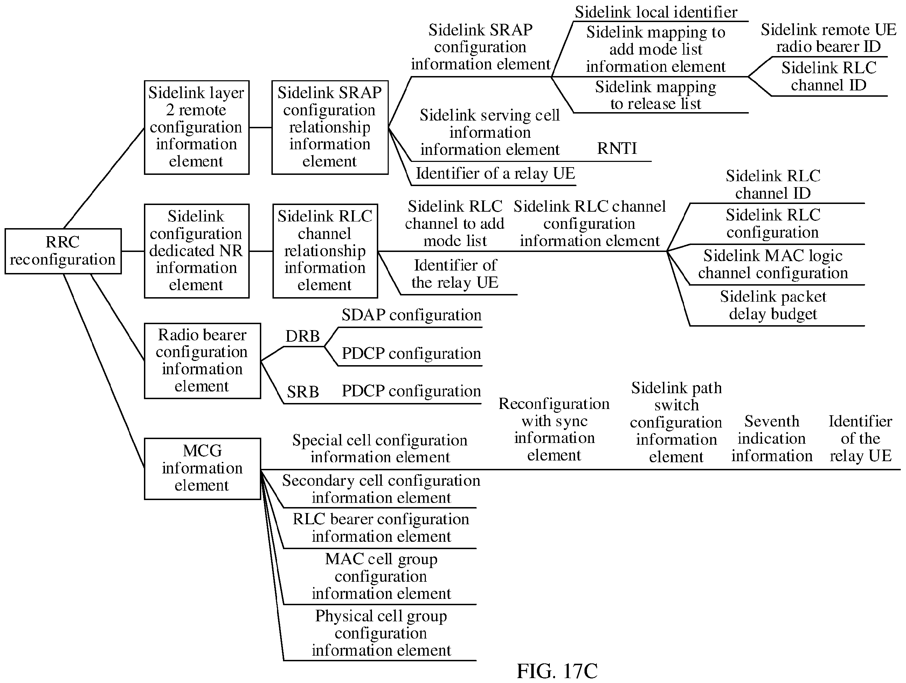

For another example, the access network device releases the indirect path 2 for the remote UE by using the RRC reconfiguration message. The indirect path 2 corresponds to the second cell. The remote UE has maintained the indirect path 1. The indirect path 1 corresponds to the first cell. The second cell is, for example, a PCell in an MCG of the remote UE. The second cell and the first cell are, for example, different cells. For an implementation of the RRC reconfiguration message, refer to FIG. 17C. In FIG. 17C, the seventh indication information indicates, for example, that the indirect path is kept. In this case, the identifier of the relay UE shown in FIG. 17C is, for example, an identifier of the relay UE 1 corresponding to the indirect path 1 kept by the remote UE.

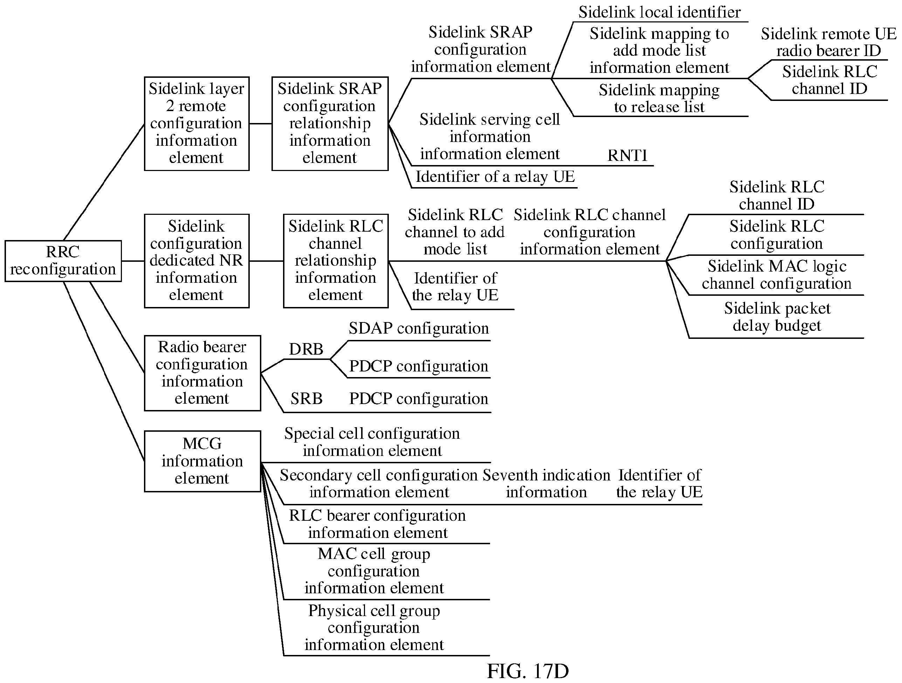

For another example, the access network device releases a direct path A for the remote UE by using the RRC reconfiguration message. The direct path A corresponds to the second cell. The remote UE has maintained an indirect path B. The indirect path B corresponds to the first cell. For example, the first cell is a PCell in an MCG of the remote UE. The second cell and the first cell are different cells. For example, the second cell is an SCell in the MCG of the remote UE. For an implementation of the RRC reconfiguration message, refer to FIG. 17D. In FIG. 17D, the seventh indication information indicates, for example, that the indirect path is released. In this case, the identifier of the relay UE shown in FIG. 17D is, for example, an identifier of the relay UE 2 corresponding to the indirect path 2 released by the remote UE.

For related content in FIG. 17B to FIG. 17D, refer to the foregoing descriptions of FIG. 17A.

S1603: The remote UE modifies the indirect path (for example, the indirect path 2) based on the RRC reconfiguration message, and does not modify another path. The another path is a path, other than the indirect path (for example, the indirect path 2), maintained by the remote UE. The another path includes, for example, a direct path and/or an indirect path. In other words, for a path that is not indicated by the RRC reconfiguration message for modification, the remote UE may continue to maintain the path, and do not perform modification (for example, do not perform reconfiguration or releasing).

For example, the RRC reconfiguration message indicates to add the indirect path 2. In this case, the remote UE can determine, based on first association information and second association information that are included in the RRC reconfiguration message, configuration information corresponding to the indirect path 2, to add the indirect path 2 based on the configuration information, and remain another path (for example, including a direct path and/or an indirect path) of the remote UE unchanged.

For another example, the RRC reconfiguration message indicates to release the indirect path 2. In this case, the remote UE can determine, based on first association information and second association information that are included in the RRC reconfiguration message, configuration information corresponding to the indirect path 2 or an unreleased indirect path 1, to release the indirect path 2 based on the configuration information, and remain the indirect path 1 unchanged.

S1604: The remote UE sends an RRC reconfiguration complete message to the access network device. Correspondingly, the access network device receives the RRC reconfiguration complete message sent by the remote UE.

For example, the RRC reconfiguration message indicates to add the indirect path 2. In this case, after adding the indirect path 2 based on the RRC reconfiguration message, the remote UE may send the RRC reconfiguration complete message through the indirect path 2 (or via the relay UE 2); or after adding the indirect path 2 based on the RRC reconfiguration message, the remote UE may send the RRC reconfiguration complete message through the indirect path 1 (or via the relay UE 1). This is used as an example in FIG. 16.

For another example, the RRC reconfiguration message indicates to release the indirect path 2. In this case, after releasing the indirect path 2 based on the RRC reconfiguration message, the remote UE may send the RRC reconfiguration complete message through the indirect path 1 (or via the relay UE 1).

In this embodiment of this application, the remote UE can maintain a plurality of indirect paths. When some of the indirect paths are added or released, the remote UE may distinguish between configuration information of currently added or released indirect paths, to improve a success rate of adding or releasing the indirect paths. In addition, when an indirect link is added or released, communication on another indirect link is not affected, and a communication delay can be reduced.

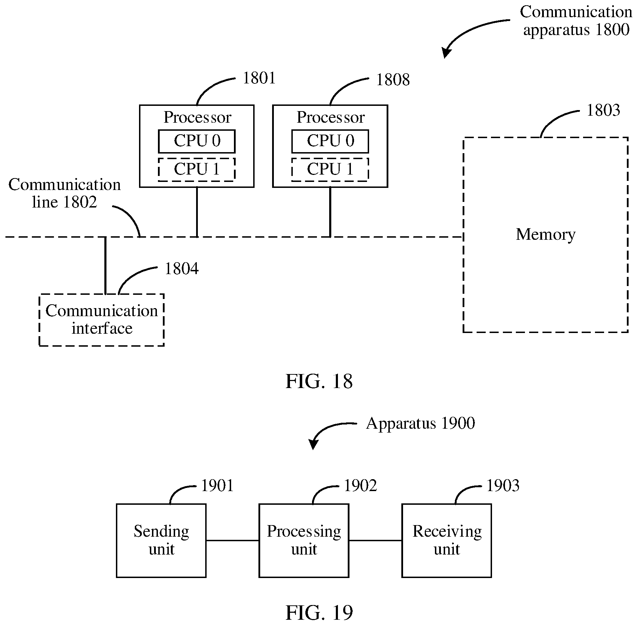

FIG. 18 is a diagram of a structure of a communication apparatus according to an embodiment of this application. The communication apparatus 1800 may be the access network device or a circuit system of the access network device in the embodiment shown in any one of FIG. 6, FIG. 8, FIG. 10, FIG. 12, FIG. 14, or FIG. 16, and is configured to implement the method corresponding to the access network device in the foregoing method embodiments. Alternatively, the communication apparatus 1800 may be a circuit system of the remote UE in the embodiment shown in any one of FIG. 6, FIG. 8, FIG. 10, FIG. 12, FIG. 14, or FIG. 16, and is configured to implement the method corresponding to the remote UE in the foregoing method embodiments. For a specific function, refer to the descriptions in the foregoing method embodiments. For example, a circuit system is a chip system.

The communication apparatus 1800 includes at least one processor 1801. The processor 1801 may be configured to perform internal processing of the apparatus, to implement a specific control processing function. Optionally, the processor 1801 includes instructions. The processor 1801 may store data. Optionally, different processors may be independent components, may be located in different physical locations, or may be located on different integrated circuits. Optionally, different processors may be integrated into one or more processors, for example, integrated into one or more integrated circuits.

Optionally, the communication apparatus 1800 includes one or more memories 1803, configured to store instructions. Optionally, the memory 1803 may further store data. The processor and the memory may be separately disposed, or may be integrated together.

Optionally, the communication apparatus 1800 includes a communication line 1802 and at least one communication interface 1804. Because the memory 1803, the communication line 1802, and the communication interface 1804 are all optional, they are all represented by using dashed lines in FIG. 18.

Optionally, the communication apparatus 1800 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 1800 via the antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 1801 may include a general-purpose central processing unit (central processing unit, CPU), a microprocessor, an application-specific integrated circuit (application-specific integrated circuit, ASIC), or one or more integrated circuits for controlling program execution for the solutions of this application.

The communication line 1802 may include a path for transmitting information between the foregoing components.

The communication interface 1804 is configured to communicate with another device or a communication network such as an ethernet, a radio access network (radio access network, RAN), or a wireless local area network (wireless local area network, WLAN) by using any apparatus such as a transceiver.

The memory 1803 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory 1803 may exist independently, and be connected to the processor 1801 over the communication line 1802. Alternatively, the memory 1803 may be integrated with the processor 1801.

The memory 1803 is configured to store computer-executable instructions for performing the solutions of this application, and the processor 1801 controls execution. The processor 1801 is configured to execute the computer-executable instructions stored in the memory 1803, to implement the communication methods provided in the foregoing embodiments of this application.

Optionally, the computer-executable instructions in embodiments of this application may also be referred to as application program code. This is not specifically limited in embodiments of this application.

During specific implementation, in an embodiment, the processor 1801 may include one or more CPUs, for example, a CPU 0 and a CPU 1 in FIG. 18.

During specific implementation, in an embodiment, the communication apparatus 1800 may include a plurality of processors such as the processor 1801 and a processor 1808 in FIG. 18. Each of the processors may be a single-core (single-CPU) processor, or may be a multicore (multi-CPU) processor. The processor herein may be one or more devices, circuits, and/or processing cores configured to process data (for example, computer program instructions).

When the apparatus shown in FIG. 18 is a chip, for example, a chip of an access network device or a chip of remote UE, the chip includes the processor 1801 (may further include the processor 1808), the communication line 1802, the memory 1803, and the communication interface 1804. Specifically, the communication interface 1804 may be an input interface, a pin, a circuit, or the like. The memory 1803 may be a register, a buffer, or the like. The processor 1801 and the processor 1808 each may be a general-purpose CPU, a microprocessor, an ASIC, or one or more integrated circuits for controlling program execution for the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, there may be another division manner. For example, when each functional module is obtained through division based on each corresponding function, FIG. 19 is a diagram of an apparatus. The apparatus 1900 may be the access network device or the remote UE in the foregoing method embodiments, or may be a chip in the access network device or a chip in the remote UE. The apparatus 1900 includes a sending unit 1901, a processing unit 1902, and a receiving unit 1903.

It should be understood that the apparatus 1900 may be configured to implement the steps performed by the access network device or the remote UE in the method in embodiments of this application. For related features, refer to the foregoing embodiments. Details are not described herein again.

Optionally, functions/implementation processes of the sending unit 1901, the receiving unit 1903, and the processing unit 1902 in FIG. 19 may be implemented by the processor 1801 in FIG. 18 by invoking computer-executable instructions stored in the memory 1803. Alternatively, functions/implementation processes of the processing unit 1902 in FIG. 19 may be implemented by the processor 1801 in FIG. 18 by invoking computer-executable instructions stored in the memory 1803, and functions/implementation processes of the sending unit 1901 and the receiving unit 1903 in FIG. 19 may be implemented by the communication interface 1804 in FIG. 18.

Optionally, when the apparatus 1900 is a chip or a circuit, functions/implementation processes of the sending unit 1901 and the receiving unit 1903 may alternatively be implemented by using a pin, a circuit, or the like.

This application further provides a computer-readable storage medium. The computer-readable storage medium stores computer programs or instructions. When the computer programs or the instructions are run, the method performed by the access network device or the remote UE in the foregoing method embodiments is implemented. In this way, the function in the foregoing embodiment may be implemented in a form of a software functional unit and sold or used as an independent product. Based on such an understanding, the technical solutions of this application essentially, or the part contributing to the conventional technology, or some of the technical solutions may be implemented in a form of a software product. The computer software product is stored in a storage medium and includes several instructions for enabling a computer device (which may be a personal computer, a server, a network device, or the like) to perform all or some of the steps of the methods described in embodiments of this application. The storage medium includes any medium that can store program code, for example, a USB flash drive, a removable hard disk drive, a ROM, a RAM, a magnetic disk, or an optical disc.

This application further provides a computer program product. The computer program product includes computer program code. When the computer program code is run on a computer, the computer is enabled to perform the method performed by the access network device or the remote UE in any one of the foregoing method embodiments.

An embodiment of this application further provides a processing apparatus, including a processor and an interface. The processor is configured to perform the method performed by the access network device or the remote UE in any one of the foregoing method embodiments.

All or some of the foregoing embodiments may be implemented by using software, hardware, firmware, or any combination thereof. When the software is used for implementation, all or a part of the embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

Various illustrative logic units and circuits described in embodiments of this application may implement or operate the described functions by using a general-purpose processor, a digital signal processor (digital signal processor, DSP), an application-specific integrated circuit (application-specific integrated circuit, ASIC), a field-programmable gate array (field-programmable gate array, FPGA), another programmable logic apparatus, a discrete gate, transistor logic, a discrete hardware component, or any combination thereof. The general-purpose processor may be a microprocessor. Optionally, the general-purpose processor may alternatively be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk drive, a removable disk, a CD-ROM, or a storage medium in any other format in this field. For example, the storage medium may connect to a processor, to enable the processor to read information from the storage medium and write information into the storage medium. Optionally, the storage medium may alternatively be integrated into a processor. The processor and the storage medium may be disposed in an ASIC, and the ASIC may be disposed in a terminal device. Optionally, the processor and the storage medium may alternatively be disposed in different components in a terminal device.

These computer program instructions may also be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application that are defined by the appended claims, and are considered to cover any or all of modifications, variations, combinations, or equivalents in the scope of embodiments of this application. Apparently, a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A communication method, applied to an access network device, wherein the method comprises:
determining to add, for a remote terminal device, a direct path for connecting a first cell, wherein the remote terminal device is connected to a second cell through an indirect path; and
sending a radio resource control RRC reconfiguration message to the remote terminal device, wherein the RRC reconfiguration message indicates the remote terminal device to switch to the direct path, the RRC reconfiguration message further comprises first indication information, and the first indication information indicates not to release the indirect path.

2. The method according to claim 1, wherein
the RRC reconfiguration message comprises a master cell group MCG information element, and the MCG information element comprises the first indication information.

3. The method according to claim 2, wherein that the MCG information element comprises the first indication information comprises:
the MCG information element comprises a special cell configuration information element, the special cell configuration information element comprises a reconfiguration with sync information element, and the reconfiguration with sync information element comprises the first indication information; or
the MCG information element comprises a secondary cell configuration information element, the secondary cell configuration information element comprises a reconfiguration with sync information element, and the reconfiguration with sync information element comprises the first indication information.

4. The method according to claim 3, wherein the special cell configuration information element comprises a parameter used by the remote terminal device to communicate in the first cell.

5. The method according to any one of claims 2 to 4, wherein the MCG information element further comprises the secondary cell configuration information element, the secondary cell configuration information element comprises second indication information, and the second indication information indicates to change the second cell from a special cell in an MCG of the remote terminal device to a secondary cell in the MCG.

6. The method according to claim 5, wherein the second indication information comprises configuration information of the indirect path.

7. The method according to any one of claims 1 to 6, wherein the first cell and the second cell are a same cell or different cells.

8. A communication method, applied to an access network device, wherein the method comprises:
determining to add, for a remote terminal device, an indirect path for connecting a second cell via a relay terminal device, wherein the remote terminal device is connected to a first cell through a direct path; and
sending an RRC reconfiguration message to the remote terminal device, wherein the RRC reconfiguration message comprises third indication information, and the third indication information indicates to add the indirect path.

9. The method according to claim 8, wherein the RRC reconfiguration message comprises an MCG information element, and the MCG information element comprises the third indication information.

10. The method according to claim 9, wherein that the MCG information element comprises the third indication information comprises:
the MCG information element comprises a special cell configuration information element, the special cell configuration information element comprises a reconfiguration with sync information element, and the reconfiguration with sync information element comprises the third indication information; or
the MCG information element comprises a secondary cell configuration information element, and the secondary cell configuration information element comprises the third indication information.

11. The method according to any one of claims 8 to 10, wherein the third indication information comprises configuration information of the indirect path.

12. A communication method, applied to an access network device, wherein the method comprises:
determining to add a first path for a remote terminal device, wherein the remote terminal device is connected to a network through a second path, the first path is a direct path for connecting the remote terminal device and a first cell of the access network device, and the second path is an indirect path for connecting the remote terminal device and a second cell via a relay terminal device; or the first path is an indirect path for connecting the remote terminal device and a second cell via a relay terminal device, and the second path is a direct path for connecting the remote terminal device and a first cell of the access network device; and
sending an RRC reconfiguration message to the remote terminal device, wherein the RRC reconfiguration message indicates the remote terminal device to add the first path to a secondary cell group SCG.

13. The method according to claim 12, wherein that the RRC reconfiguration message indicates the remote terminal device to add the first path to an SCG comprises:
the RRC reconfiguration message comprises an SCG information element, the SCG information element comprises a special cell configuration information element, the special cell configuration information element comprises fourth indication information, and the fourth indication information indicates to add the first path.

14. The method according to claim 13, wherein the first path is the direct path, and the fourth indication information comprises configuration information of the first path.

15. The method according to claim 13, wherein the first path is the indirect path, and the fourth indication information comprises configuration information of the indirect path.

16. The method according to claim 15, wherein
the SCG information element comprises the special cell configuration information element, the special cell configuration information element comprises a reconfiguration with sync information element, and the reconfiguration with sync information element comprises the fourth indication information.

17. A communication method, applied to an access network device, wherein the method comprises:
determining to release a first path for a remote terminal device, wherein the remote terminal device is connected to a network through a second path, the first path is a direct path for connecting the remote terminal device and a first cell of the access network device, and the second path is an indirect path for connecting the remote terminal device and a second cell via a relay terminal device; or the first path is an indirect path for connecting the remote terminal device and a second cell via a relay terminal device, and the second path is a direct path for connecting the remote terminal device and a first cell of the access network device; and
sending an RRC reconfiguration message to the remote terminal device, wherein the RRC reconfiguration message comprises fifth indication information, and the fifth indication information indicates to release the first path.

18. The method according to claim 17, wherein if the first path is the direct path, and the second path is the indirect path, the fifth indication information specifically indicates not to release the second path.

19. The method according to claim 17 or 18, wherein the RRC reconfiguration message comprises an MCG information element, and the MCG information element comprises the fifth indication information.

20. The method according to claim 19, wherein that the MCG information element comprises the fifth indication information comprises:
if the first path is the direct path, and the second path is the indirect path, the MCG information element comprises a special cell configuration information element, the special cell configuration information element comprises a reconfiguration with sync information element, the reconfiguration with sync information element comprises a sidelink path switch configuration information element, and the sidelink path switch configuration information element comprises the fifth indication information.

21. The method according to any one of claims 17 to 20, wherein if the first path is the direct path, and the second path is the indirect path, the RRC reconfiguration message further comprises sixth indication information, and the sixth indication information indicates packet data convergence protocol PDCP entity re-establishment or data recovery.

22. The method according to claim 19, wherein if the first path is the indirect path, and the second path is the direct path, that the MCG information element comprises the fifth indication information comprises:
the MCG information element comprises a special cell configuration information element, the special cell configuration information element comprises a reconfiguration with sync information element, and the reconfiguration with sync information element comprises the fifth indication information;
the MCG information element comprises a secondary cell configuration information element, and the secondary cell configuration information element comprises the fifth indication information; or
the MCG information element comprises a special cell configuration information element and a secondary cell configuration information element, the special cell configuration information element comprises the fifth indication information and configuration information of the direct path, and the secondary cell configuration information element comprises configuration information of the indirect path.

23. The method according to claim 22, wherein if the MCG information element comprises the secondary cell configuration information element, and the secondary cell configuration information element comprises the fifth indication information, and
if the remote terminal device is further connected to a cell corresponding to the first path through another path, the fifth indication information specifically indicates to release the first path; or
if the remote terminal device is connected to a cell corresponding to the first path only through the first path, the fifth indication information specifically indicates to release a secondary cell corresponding to the secondary cell configuration information element.

24. The method according to claim 17, wherein that the fifth indication information indicates to release the first path comprises:
the fifth indication information specifically indicates to release an SCG in which a cell corresponding to the first path is located;
the fifth indication information indicates to release an MCG in which a cell corresponding to the first path is located; or
the fifth indication information comprises first sub information and second sub information, the first sub information indicates to change, to a new SCG, an MCG in which a cell corresponding to the first path is located, and indicates to change an original SCG to a new MCG, and the second sub information indicates to release the new SCG.

25. A communication device, comprising:
one or more processors;
one or more memories; and
one or more computer programs, wherein the one or more computer programs are stored in the one or more memories, the one or more computer programs comprise instructions, and when the instructions are executed by the one or more processors of the communication device, the communication device is enabled to perform the method according to any one of claims 1 to 7, the communication device is enabled to perform the method according to any one of claims 8 to 11, the communication device is enabled to perform the method according to any one of claims 12 to 16, or the communication device is enabled to perform the method according to any one of claims 17 to 24.

26. A computer-readable storage medium, wherein the computer-readable storage medium is configured to store a computer program; and when the computer program is run on a computer, the computer is enabled to perform the method according to any one of claims 1 to 7, the computer is enabled to perform the method according to any one of claims 8 to 11, the computer is enabled to perform the method according to any one of claims 12 to 16, or the computer is enabled to perform the method according to any one of claims 17 to 24.

27. A chip, comprising one or more processors and one or more communication interfaces, wherein the one or more processors are configured to read instructions, to perform the method according to any one of claims 1 to 7, perform the method according to any one of claims 8 to 11, perform the method according to any one of claims 12 to 16, or perform the method according to any one of claims 17 to 24.
